# EUROPEAN PATENT APPLICATION

(11) **EP 4 844 597 A1**
(43) Date of publication of application: **25.11.2026**
(21) Application number: 26179305.3
(22) Date of filing: 18.05.2026
(51) Int. Cl.: G06F 13/40, G06F 13/42

(54) **DATA BUS CIRCUIT WITH SELF-TIMED SERIALIZATION**

(30) Priority: 20.05.2025 US 202519213694
(71) Applicant: Avago Technologies International Sales Pte. Limited, Singapore 768923 (SG)
(72) Inventor: Everson, Luke Robert, Mendota Heights, 55118 (US); Monzel, Carl Anthony, Inver Grove Heights, 55077 (US); Buer, Myron James, Prior Lake, 55372 (US)
(74) Representative: Dilg, Haeusler, Schindelmann Patentanwaltsgesellschaft mbH

(57) **Abstract**

A circuit includes a data serializer comprising a first plurality of data inputs and a first clock input, a data transmission line coupled to the data serializer and comprising a first plurality of signal repeaters, and a data deserializer comprising a second plurality of data inputs coupled to the data transmission line, a plurality of second clock inputs, and a plurality of data outputs. The circuit also includes an internal clock generating circuit coupled to a system clock line, the internal clock generating circuit comprising a transmit clock output coupled to the first clock input, and a plurality of receive clock outputs coupled to respective second clock inputs of the plurality of second clock inputs.

## Description

### BACKGROUND

In modern computing systems, data bus widths continue to increase to support enhanced performance as process gains diminish with each technology node. The density of upper layer metals used to transfer data between blocks inside chips is becoming a limiting factor in many designs. The density of upper layer metals does not scale with the critical parameter scaling (transistor gate length) further exacerbating this issue. Routing resources often constrain bus widths, while increased resistance can lead to higher latency, both of which may impact overall system performance.

Existing approaches to high-speed data transmission on integrated circuits face various challenges. Some systems transmit one bit of data per wire in each clock cycle, utilizing conventional synthesis and place-and-route techniques to construct bus structures. Other methods, such as double data rate (DDR) transmission or multi-level signaling, can present difficulties in maintaining signal integrity or may require complex analog circuitry. These approaches may be sensitive to noise, process variations, and changes in voltage and temperature, potentially leading to increased power consumption or reduced reliability in certain applications.

### BRIEF DESCRIPTION OF THE DRAWINGS

The disclosure will become fully understood from the following detailed description, taken in conjunction with the accompanying figures, wherein like reference numerals refer to like elements, in which:
FIG. 1 is a block diagram of a data bus circuit, according to an exemplary embodiment;
FIG. 2 is a block diagram of a data bus circuit, according to an exemplary embodiment;
FIG. 3 is a block diagram of another data bus circuit, according to an exemplary embodiment;
FIG. 4A is a timing diagram showing clock signal relationships in a data transmission system, according to an exemplary embodiment;
FIG. 4B is a block diagram of an example clock signal generating circuit, according to an exemplary embodiment;
FIG. 5A is a block diagram of a data bus circuit with multiple data and clock lines, according to an exemplary embodiment;
FIG. 5B is a buffer segment timing diagram showing data transmission across multiple wires, according to an exemplary embodiment;
FIG. 6 is a cross-sectional view of an integrated circuit with buffer semiconductor structures, according to an exemplary embodiment;
FIG. 7 is a block diagram of a device with an integrated circuit containing data bus circuits, according to an exemplary embodiment; and
FIG. 8 is a block diagram of a system for implementing data bus circuitry, according to an exemplary embodiment.

### DETAILED DESCRIPTION

Before turning to the figures, which illustrate the exemplary embodiments in detail, it should be understood that the application is not limited to the details or methodology set forth in the description or illustrated in the figures. It should also be understood that the terminology is for the purpose of description only and should not be regarded as limiting.

Approaches such as double data rate (DDR), where data is transmitted on both the rising and falling edges of the clock or Pulse Amplitude Modulation, where data is transmitted on more than 2 levels (e.g., PAM4 using 4 digital levels), may present various challenges such as control of the system clock duty-cycle for proper operation. Approaches such as Phase Amplitude Modulation may involve analog blocks to implement. In some cases, these blocks may use current mode logic which may draw static current and may require complex analog design. These blocks may be sensitive to noise, process variations, and changes in voltage and temperature (PVT). In some implementations, these circuits may run at higher supply voltages to accommodate the required headroom, which may result in increased power consumption.

The described technology may provide a structured and self-timed system that may send N bits down a single wire in a single cycle. The number of bits chosen may be based on the latency/bandwidth needs of the application. In some cases, more bits may increase bandwidth but also increase latency. On the driver side, there may be a circuit that provides a transmission clock that cycles N times. The input to this circuit may be the system clock, the primary edge of which may start a state machine to produce the clock edges. The state machine may contain a latching element to remove any dependency on the falling edge or inactive system edge. In some implementations, the internal clock high and low phase may be determined by a replica wire that matches a portion of the data wire to ensure adequate pulse widths. The transmission clock may be used to clock a data serializer on each data wire. The data serializer may take N bits of parallel data and serialize it. In some cases, the clock generation circuit may also send N receive clocks that are 180 degrees out of phase with the transmit clock and are physically matched with the data wire. In other cases the data and clock could transmit in phase so the two signals see the same environmental conditions (voltage, temperature, and external coupling) and at the receiver a delay circuit could give the required hold time shift. On the far end of the wire, the receive clock(s) may be used to capture the data in registers.

As processes continue to shrink in dimensions, metal pitch may not shrink as fast as the critical features (gate lengths), driving increased need for strategies that can encode multiple data bits on a single metal wire. The described technology may fulfill that need and since the architecture may be all-digital, it may forestall scaling concerns that would otherwise be faced in complex analog design. In some implementations, the described technology may use structured and self-timed circuit techniques to allow for fast accurate transmission of digital data. Standard synthesis and place and route may use arbitrary clocks and data paths that are not perfectly synchronized and matched. In some cases, the described technology may utilize standard digital circuits which may be resilient to PVT fluctuations. The described technology may be implemented without requiring analog blocks, separate power supplies, voltage references, or guard rings. In some cases, the described technology may provide a greater density compared to conventional approaches, by transmitting multiple bits per wire and reducing routing area via a unified layout. The described technology may support routing hundreds of thousands of wires between interfaces and processing cores, allowing more silicon area to be dedicated to processing elements rather than routing resources.

In some cases, various examples may be described with respect to integrated circuits (ICs) where polysilicon may be deposited in parallel strips separated by a "poly pitch." It should be understood that the technology described may be implemented in other IC architectures that may not have this specific arrangement of polysilicon strips. The described technology may be applicable to various IC designs and manufacturing processes, regardless of the specific arrangement of polysilicon or other conductive materials used to form transistor gates or interconnects. The principles of structured and self-timed circuit techniques for data transmission may be adapted to suit different IC architectures and design methodologies.

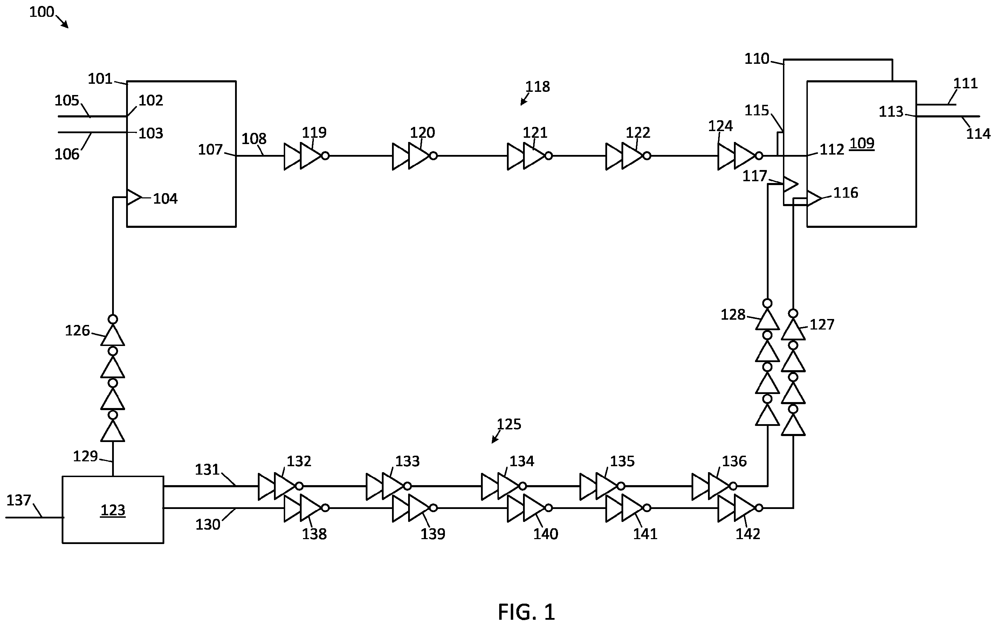

FIG. 1 illustrates an example data bus circuit 100 that supports transfer of data across an integrated circuit (IC). For example, data bus circuit 100 may be implemented to transfer data between an IC interconnect (e.g., external data pins) and an IC processing core. Data bus circuit 100 may be a component of systems such as switch application-specific integrated circuits (ASICs), graphics processing units (GPUs), hardware accelerators, general parallel processing units, etc. Data bus circuit 100 may utilize structured and self-timed circuit techniques for data transmission. In some cases, these techniques may allow multiple bits to be transmitted on a data transmission line 108 within a single system clock cycle. For ease of explanation, FIG. 1 is described with respect to an implementation where two bits are sent across the bus during each system clock cycle. Implementations in practice may comprise buses having hundreds of thousands of wires and may transmit any suitable number of bits per wire per system clock cycle.

Data bus circuit 100 may include a data serializer comprising a plurality of data inputs and a clock input. In the following, example implementations are described with shift registers as example data sterilizers (e.g., shift register 101). However, a data serializer may comprise any circuit that comprises circuitry to receive different data bits (e.g., on corresponding inputs) and output the received bits in a serial manner on a shared output. For instance, a data serializer may comprise a shift register, a tri-state enabled parallel register, etc. The number of data inputs may correspond to the number of bits that can be transmitted per system clock cycle. For example, in an implementation where two bits are sent per system clock cycle, shift register 101 may have a first data input 102 connected to a first data line 105 and a second data input 103 coupled to a second data line 106. In implementations where more bits are transmitted per system clock cycle, shift register 101 may include additional corresponding data inputs. Shift register 101 may also include a clock input 104. Shift register 101 comprises a parallel-to-serial converter that receives multiple data bits simultaneously at its data inputs and, under control of a clock signal received at clock input 104, sequentially shifts these bits out one at a time through data output 107. During operation, when a clock pulse is received at clock input 104, shift register 101 captures the parallel data present at first data input 102 and second data input 103 and begins to serialize this data, shifting out one bit with each subsequent clock pulse. This conversion from parallel data to a serial bitstream allows multiple bits to be transmitted over data transmission line 108 within one system clock cycle. In some cases, data serializer 101 may be implemented using standard digital circuit components such as D-type flip-flops coupled in series, with multiplexers at the input of each flip-flop to select between the parallel input data and the output of the previous flip-flop. In other implementations, data serializer 101 may be constructed using JK flip-flops, SR flip-flops, custom logic cells for serialization operations, etc. As an example, a data serializer 101 comprising a shift register may comprise parallel-in shift register comprising a cascade of flip-flops or like components that are interconnected via logic gates, such as NAND gates, and controlled via control lines, such as a write/shift control line and clocked via clock input lines.

In various implementations, inputs and outputs may comprise any circuit elements to receive and/or transmit signals or to receive and/or transmit power. For instance, a data input may comprise any element providing an interface for a circuit component to receive data while a clock input may comprise any element providing an interface for a circuit component to receive a clock signal. For instance, a data/clock input may comprise one or more physical connections (e.g., pins) that implement a input port for a circuit element. Unless context indicates otherwise, inputs may comprise analog inputs, digital inputs, bi-directional inputs, etc. Similarly, a data output may comprise any circuit element providing an interface for a circuit element or module to transmit data, while a clock output may comprise any element providing an interface for a circuit component to transmit a clock signal. For instance, a data/clock output may comprise one or more physical connections (e.g., pins) that implement an output port for a circuit element. Unless context indicates otherwise, data outputs may comprise analog outputs, digital outputs, bi-directional outputs, etc.

As used herein, the term "line" in the context of VLSI integrated circuits may refer to any conductive path or channel for transmitting signals, data, or power between components or across regions of an integrated circuit. A line may be implemented using one or more conductive traces, wires, or interconnects fabricated from materials such as metal, polysilicon, or other conductive materials. Lines may support various signaling methods, including but not limited to single-ended signaling, differential signaling, current mode signaling, voltage mode signaling, or optical signaling. In some cases, a line may comprise multiple physical conductors working together as a single logical pathway, such as in differential pairs or multi-conductor buses.

As used herein, the term "system clock line" may refer to any conductive path, network, or distribution system used to transmit or propagate a system clock signal within an integrated circuit or electronic system. A system clock line may comprise a single conductor, multiple conductors, a hierarchical tree structure, a grid, or any combination thereof. It may include buffers, repeaters, phase-locked loops (PLLs), delay-locked loops (DLLs), clock gaters, or other clock management circuitry. The system clock line may support various signaling methods, including but not limited to single-ended, differential, or optical signaling. In some implementations, a system clock line may refer to a conceptual pathway for clock distribution rather than a single physical trace, encompassing multiple clock domains, clock trees, or global and local clock networks.

As used herein, the term "system clock" may refer to one or more primary timing references used to synchronize operations within an integrated circuit or electronic system. A system clock may comprise a single master clock signal or multiple related clock signals operating at the same or different frequencies, phases, or duty cycles. It may encompass multiple clock domains, each potentially having its own frequency, phase, or distribution network. The system clock may be generated internally within the integrated circuit, received from an external source, or derived from other timing references. It may be used directly or serve as a reference for generating additional clock signals through frequency multiplication, division, or phase shifting.

As used herein, the term "phase relationship" may refer to the relative timing, alignment, or offset between two or more signals, clock edges, or events within an electronic circuit or system. In the context of clock signals and data transmission, a phase relationship may describe the temporal positioning of one signal or event with respect to another, which can be expressed in terms of time delay, angular displacement, or fractional parts of a clock cycle. Phase relationships may be fixed or variable, and may be intentionally designed or dynamically adjusted to achieve specific circuit behaviors or performance characteristics. Phase relationships may encompass various timing scenarios, including but not limited to: the alignment of clock edges with data transitions or sampling points; the relative timing between transmit and receive clock signals; the spacing between multiple clock phases in a multi-phase clock system; the timing offset between parallel data streams in a high-speed interface; or the synchronization between different clock domains. The term may also apply to the relationship between a clock signal and a data signal, between multiple clock signals, or among multiple data signals.

Data bus circuit 100 may include a data deserializer to sample the serialized data transmitted on data transmission line 108 and output the data on parallel data outputs lines 111, 114, which correspond to data lines 105, 106. In the following text, sets of registers generally serve as example data deserializers. However, a data deserializer may comprise any circuitry for receiving serialized and outputting parallel data bits may be employed, such as serial-to-parallel shift registers, transparent latch arrangements, flip-flops, etc. In the illustrated example, the set of registers includes a first register 109 and a second register 110. For instance, this example may correspond to a data bus architecture for sending two bits per system clock cycle. Each register 109, 110 may comprise a register data input, a clock input, and a data output. For example, first register 109 may include a data input 112, a clock input 116, and a data output 113 coupled to a first output data line 114. Similarly, second register 110 may include a data input 115, a clock input 117, and may be coupled to a second output data line 111. In some cases, the number of registers in the set may correspond to the number of data inputs of shift register 101. The set of registers may function to convert the serial data transmitted over data transmission line 108 back into parallel data for output on first output data line 114 and second output data line 111. Each register 109, 110 in the set of registers may receive a corresponding receive clock signal through clock inputs 116 and 117, with these receive clock signals being temporally offset with respect to each other. The temporal offset between receive clock signals may ensure that each register captures the correct bit from the serialized data stream on data transmission line 108. For example, first register 109 may capture a first bit transmitted by shift register 101 in response to a first receive clock signal received at clock input 116, while second register 110 may capture a second bit transmitted by shift register 101 in response to a second receive clock signal received at clock input 117. In some cases, the first receive clock signal and the second receive clock signal may be phase-shifted relative to each other to align with the timing of their respective data bits as the bits propagate through data transmission line 108. In some implementations, registers 109, 110 may be implemented using D-type flip-flops, where the data input 112, 115 connects to the D input of the flip-flop, the clock input 116, 117 connects to the clock input of the flip-flop, and the data output 113 corresponds to the Q output of the flip-flop. In other implementations, registers 109, 110 may be implemented using edge-triggered JK flip-flops configured in toggle mode, master-slave flip-flops, or transparent latches with appropriate clock gating to control when data is captured. The specific register circuit implementation may be selected based on timing requirements, power constraints, and available semiconductor process technology.

In some implementations, the data deserializer may comprise alternative configurations to the set of registers shown in FIG. 1. For example, the data deserializer may include a single flip-flop at the receiving end, with data transmission line 108 directly serving as the output line without additional register stages. This simplified configuration may reduce component count but may introduce timing challenges in certain scenarios. In some cases, when the length of data transmission line 108 falls below a threshold value, the single flip-flop implementation may encounter hold time violations due to clock skew between consecutive buffer stages. To address these timing concerns, the data deserializer may implement a hybrid approach using transparent latches instead of full registers for capturing serialized data. In this configuration, a transparent latch may share a sample clock with other bits in the transmission sequence, allowing for more flexible timing windows. The transparent latch may capture the first bit on the primary edge of the sample clock and remain transparent to capture subsequent data until the sample clock signal transitions to a low state. In some implementations, the data deserializer may include a combination of edge-triggered flip-flops and level-sensitive latches according to timing margins across different operating conditions. The level-sensitive latches may provide wider sampling windows compared to edge-triggered flip-flops. For instance, this may be employed in deployments with significant process, voltage, or temperature variations. In some cases, the data deserializer may implement a master-slave latch configuration where the master latch samples data when the clock is high, and the slave latch captures the master latch output when the clock transitions low, providing complete isolation between input and output during the entire clock cycle. The data deserializer may also incorporate pulse-triggered latches that capture data during brief sampling windows defined by internally generated pulse signals derived from the receive clock signals.

A data transmission line 108 may be coupled to shift register 101 and the register data inputs of the set of registers. Data transmission line 108 may comprise a plurality of signal repeaters. For instance data transmission line 108 may comprise a plurality of data buffers, which may be referred to as data buffer stages 118. These data buffer stages 118 may include a first buffer 119, intermediate buffers 120, 121, and 122, and a last buffer 124. In some cases, data buffer stages 118 may include additional buffers beyond those illustrated, with the number of buffers determined based on the length of data transmission line 108 and signal integrity requirements. The spacing between adjacent buffers in data buffer stages 118 may be uniform or non-uniform, with closer spacing potentially used in regions where signal degradation may be more pronounced. Each buffer in data buffer stages 118 may be implemented using digital logic components such as complementary metal-oxide-semiconductor (CMOS) inverter pairs, where two inverters are coupled in series to form a non-inverting buffer. In some cases, the buffers may be implemented using tri-state buffers that can be enabled or disabled based on control signals. Alternative implementations may include current-mode logic (CML) buffers for high-speed applications, or differential buffer pairs. The size of the transistors used in these buffer implementations may be scaled according to the required drive strength, with larger transistors used for buffers that need to drive longer wire segments or higher capacitive loads. In some implementations, the buffers may include additional logic for signal conditioning, such as slew rate control circuits.

As used herein, the term "signal repeaters" may refer to any circuit components, devices, or structures used to receive, regenerate, and retransmit signals to maintain signal integrity, extend transmission distance, or improve signal quality within an integrated circuit or electronic system. Signal repeaters may include, but are not limited to, buffers, inverters, amplifiers, level shifters, redrivers, or any combination thereof. These may be implemented using various circuit topologies such as CMOS inverters, differential pairs, operational amplifiers, or current-mode logic. Signal repeaters may be designed to maintain signal polarity, invert signals, adjust signal levels, compensate for attenuation, reduce jitter, or reshape signal waveforms. In some implementations, signal repeaters may incorporate additional functionality such as equalization, pre-emphasis, or de-emphasis to compensate for channel characteristics. Signal repeaters may be used in single-ended or differential signaling schemes, and may be adapted for use with various signaling standards or protocols.

In some implementations, the signal repeaters may include inverters instead of or in addition to buffers. In some cases, the inverters may be arranged in a staggered configuration along data transmission line 108 to manage coupling capacitance effects between adjacent wires. For example, the inverters may be positioned such that one portion of the coupling capacitance from a wire may experience the input side of an aggressor line, while another portion may experience the output side of the aggressor line. This staggered arrangement may create a scenario where approximately half of the coupling capacitance experiences positive coupling while the other half experiences negative coupling, potentially resulting in coupling effects that offset each other. The staggered inverter configuration may provide improved signal integrity by balancing the coupling effects that occur between adjacent transmission lines. In some implementations, the positioning of inverters may be specifically engineered to create these offsetting coupling effects, which may reduce overall signal distortion in high-density routing environments where multiple data transmission lines 108 run in parallel.

Data bus circuit 100 may support standard-cell design methodologies, allowing for integration with conventional digital design flows and tools. In some implementations, first buffer 119 and last buffer 124 may be positioned at fixed distances from shift register 101 and the set of registers 110, respectively. This fixed positioning may create well-defined interface boundaries between the input/output sections and the transmission path. Meanwhile, intermediate buffers 120, 121, and 122 may be located at any suitable positions along data transmission line 108 and may be automatically placed via various place-and-route design processes. In some cases, the placement of intermediate buffers 120, 121, and 122 may be determined based on total transmission distance, with the intermediate buffers distributed to maintain signal integrity while minimizing latency. This approach may allow for scalable designs that can be adapted to different transmission distances while maintaining consistent timing characteristics at the interfaces.

Data bus circuit 100 may include an internal clock generating circuit 123 coupled to a system clock line 137. Internal clock generating circuit 123 may comprise a transmit clock output coupled to clock input 104 of shift register 101, and a plurality of receive clock outputs. Each receive clock output may be coupled to a respective one of the clock inputs of the set of registers. During a system clock cycle, internal clock generating circuit 123 may generate a series of transmit clock pulses transmitted via a transmit clock output coupled to transmit clock transmission line 129, with the number of pulses corresponding to the number of data inputs of shift register 101. For example, in a configuration with two data inputs, internal clock generating circuit 123 may generate two transmit clock pulses during one system clock cycle. Internal clock generating circuit 123 may also generate corresponding receive clock signals on first receive clock transmission line 130 and second receive clock transmission line 131, with each receive clock signal comprising a pulse corresponding to one of the transmit clock pulses. In some cases, these receive clock signals may be 180 degrees out of phase with the transmit clock signal. Transmit clock inverter chain 126, first receive clock inverter chain 127, and second receive clock inverter chain 128 may condition these clock signals for the operations of shift register 101, first register 109, and second register 110.

As used herein, the term "internal clock" may refer to any clock signal or set of clock signals generated within an integrated circuit or electronic system, derived from or synchronized with a system clock, and used to control the timing of data transmission, processing, or other operations within a data bus circuit. Internal clocks may operate at the same frequency as the system clock or at different frequencies obtained through multiplication, division, or other manipulation of the system clock signal. Internal clocks may have different phases, duty cycles, or other timing characteristics tailored to specific circuit requirements. These clocks may be generated and distributed using various circuit components and techniques, including but not limited to: phase-locked loops (PLLs) that can multiply, divide, or phase-shift the system clock frequency; delay-locked loops (DLLs) for precise phase alignment and skew management; frequency dividers or multipliers implemented with flip-flops or counters; ring oscillators synchronized to the system clock; inverter chains or delay lines for creating multiple clock phases; clock gating circuits for power management; multiplexers for selecting between multiple clock sources; programmable delay circuits for fine-tuning clock timing; injection-locked oscillators for generating high-frequency clocks; and distributed clock generators that create local clock signals across different circuit regions. Internal clocks may be used to control various aspects of data transmission across a data bus, including but not limited to serialization, deserialization, sampling, synchronization, and flow control.

Clock buffer stages 125 may be provided for each receive clock output. Each plurality of clock buffers may be coupled between a respective receive clock output and the clock input of a corresponding register. The number of clock buffers in each plurality of clock buffers may correspond to the number of data buffers in data buffer stages 118. In some cases, clock buffer stages 125 may include a transmit clock inverter chain 126, a first receive clock inverter chain 127, and a second receive clock inverter chain 128. These inverter chains may be coupled to a transmit clock transmission line 129, a first receive clock transmission line 130, and a second receive clock transmission line 131, respectively. First receive clock transmission line 130 may include a first clock line buffer 132, intermediate clock line buffers 133, 134, and 135, and a last clock line buffer 136. Similarly, second receive clock transmission line 131 may include a first clock line buffer 138, intermediate clock line buffers 139, 140, and 141, and a last clock line buffer 142. This arrangement ensures that clock signals propagate through the clock buffer stages 125 with timing characteristics that match the data propagation through data buffer stages 118, enabling precise capture of serialized data at the receiving end of data bus circuit 100.

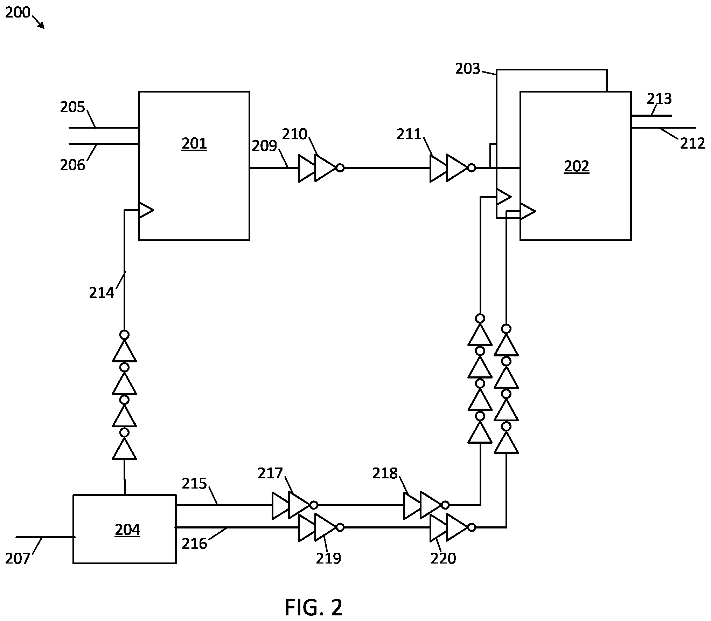

FIG. 2 illustrates a block diagram of a data bus circuit 200. Data bus circuit 200 may include a shift register 201 that receives input through a first data line 205 and a second data line 206. Shift register 201 may connect to a first register 202 and a second register 203 through a data transmission line 209. In some cases, data bus circuit 200 may be implemented with similar components and functionality as described with respect to data bus circuit 100. Data bus circuit 200 may be implemented with fewer buffer stages than data bus circuit 100, which may support applications where transmission distances are shorter or where area constraints are more restrictive. In some implementations, data bus circuit 200 may be combined with other buffer circuits to change signal direction, meet specific distance requirements, or create more complex routing topologies. For example, multiple instances of data bus circuit 200 may be arranged in series to extend transmission distance or arranged perpendicularly to facilitate changes in routing direction across an integrated circuit.

Data transmission line 209 may include buffer stages, with a first buffer 210 and a last buffer 211 positioned along the transmission path. First register 202 may connect to a first output data line 212, while second register 203 may connect to a second output data line 213. The number of buffer stages in data bus circuit 200 may be configurable during design to accommodate various transmission distance requirements. In some cases, the number of buffer stages may be automatically determined based on factors such as transmission distance or signal integrity requirements. In some implementations, data bus circuit 200 may be represented by a variant cell to a standard cell, and a standard cell may have a configurable number of buffers that may be automatically determined during an automated design process.

A clock generation circuit 204 may connect to a system clock line 207 and may provide clock signals through multiple paths. A transmit clock transmission line 214 may connect to shift register 201. A first receive clock transmission line 216 may connect to first register 202 through clock line buffers including a first clock line buffer 217 and a last clock line buffer 218. A second receive clock transmission line 215 may connect to second register 203 through clock line buffers including a first clock line buffer 219 and a last clock line buffer 220.

Clock generation circuit 204 may generate clock signals that coordinate data transmission through data bus circuit 200. In some cases, clock generation circuit 204 may generate a transmit clock signal and multiple receive clock signals within a system clock cycle. The transmit clock signal may comprise a number of pulses corresponding to the number of data inputs of shift register 201. Each receive clock signal may comprise a pulse corresponding to one of the pulses of the transmit clock signal.

Multiple clock buffers may be provided for each receive clock output. Each set of clock buffers may be coupled between a receive clock output and the clock input of a corresponding register. In some implementations, the number of clock buffers for each receive clock output may correspond to the number of data buffers on data transmission line 209.

Data may propagate from first data line 205 and second data line 206 into shift register 201, which may serialize the data for transmission. The serialized data may then travel through data transmission line 209 and through the buffer stages including first buffer 210 and last buffer 211, with the clock signals from clock generation circuit 204 maintaining timing relationships between components. At the receiving end, first register 202 and second register 203 may capture the transmitted data based on clock signals received through first receive clock transmission line 216 and second receive clock transmission line 215, respectively. The captured data may then be output through first output data line 212 and second output data line 213. This arrangement may transmit multiple bits per system clock cycle through data transmission line 209.

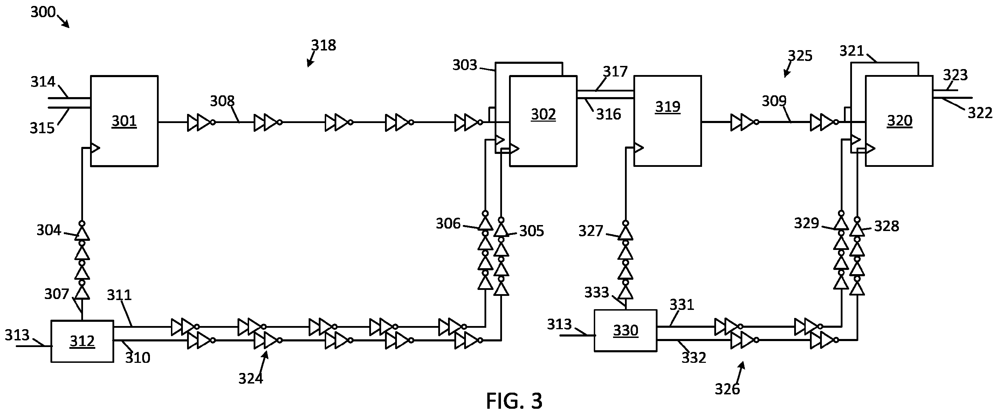

In some implementations, circuits with different configurations may be combined. For example, elements from data bus circuit 100 and data bus circuit 200 may be integrated into a single circuit design, as illustrated in FIG. 3. FIG. 3 illustrates a data bus circuit 300. Data bus circuit 300 may include a shift register 301 coupled to a first register 302 and a second register 303. Shift register 301 may receive data through first data line 314 and second data line 315, which provide parallel data inputs to shift register 301. During operation, shift register 301 may serialize the data received from first data line 314 and second data line 315, and transmit the serialized data through data transmission line 308. The serialized data may propagate through buffer stages 318. First register 302 and second register 303 may capture the serialized data from data transmission line 308 based on clock signals received through first receive clock line 310 and second receive clock line 311, respectively. The captured data may then be output through first output data line 316 and second output data line 317. In some cases, data bus circuit 300 may include additional components arranged in series, such as shift register 319, first register 320, and second register 321. The data outputs from first register 302 and second register 303 may be coupled to the data inputs of shift register 319, allowing data to propagate through multiple stages. Shift register 319 may serialize the data received from first register 302 and second register 303, and transmit the serialized data through data transmission line 309. First register 320 and second register 321 may capture this serialized data and output the captured data through first output data line 322 and second output data line 323. This arrangement may enable data to flow from first data line 314 and second data line 315 through multiple serialization and deserialization stages before reaching first output data line 322 and second output data line 323.

Shift register 301 may receive data through a first data line 314 and a second data line 315. First register 302 may connect to a first output data line 316, while second register 303 may connect to a second output data line 317. Data transmission lines 308, 309 may extend between components, connecting shift register 301 to registers 302, 303. Buffer stages 318 may be positioned along the data transmission paths.

In some implementations, data bus circuit 300 may include additional components such as shift register 319, first register 320, and second register 321, with corresponding first output data line 322 and second output data line 323. This arrangement may allow for multiple shift registers and multiple sets of registers to be coupled in series. In some cases, each set of registers may correspond to one of the multiple shift registers.

In some cases, the data outputs of a first shift register may be coupled to the data inputs of a second shift register. For example, the data outputs of shift register 301 may be coupled to the data inputs of shift register 319. This configuration may allow for the creation of longer data transmission paths or more complex data routing schemes. Additional buffer stages 325 may be positioned within the circuit.

Internal clock generating circuit 312 may connect to a system clock line 313. Internal clock generating circuit 312 may generate a transmit clock signal on transmit clock line 307 and receive clock signals on first receive clock line 310 and second receive clock line 311. Similarly, internal clock generating circuit 330 may generate a transmit clock signal on transmit clock line 333 and receive clock signals on first receive clock line 331 and second receive clock line 332. Clock buffer stages 324 may be arranged along clock distribution paths, and clock buffer stages 326 may be positioned within the circuit.

In some cases, multiple inverter chains 304, 305, 306, 327, 328, 329 may be arranged in parallel to provide clock signal conditioning and allow the clock signal to drive multiple components within data bus circuit 300. These inverter chains may help maintain the integrity of clock signals as they propagate through the circuit to various components.

Data bus circuit 300 may enable data transmission through the buffer stages while maintaining synchronized timing relationships between clock and data signals. In some cases, any number of data bus circuits may be coupled in series and have data transmission lines varying in buffer number. The buffer stages in the data paths may correspond to matching buffer stages in the clock distribution network. For example, buffers 324 may match buffers 318, and buffers 326 may match buffers 325. This matching of buffer stages may help maintain timing relationships between clock and data signals as they propagate through the circuit.

In some implementations, shift register 301 may receive transmit clock signals via transmit clock line 307, while shift register 319 may receive transmit clock signals via transmit clock line 333. First register 302 may receive clock signals via first receive clock line 310, while first register 320 may receive clock signals via first receive clock line 331. Similarly, second register 303 may receive clock signals via second receive clock line 311, while second register 321 may receive clock signals via second receive clock line 332. This separate clock distribution for transmit and receive operations may help maintain synchronization across multiple stages of data bus circuit 300.

Data may be transmitted from first data line 314 and second data line 315 to second output data line 323 and first output data line 322 in a pipelined manner. During a system clock cycle, internal clock generating circuit 312 may generate transmit clock signals and receive clock signals that coordinate the data transmission process. In some cases, a pair of data bits received on first data line 314 and second data line 315 may be captured by shift register 301 on the primary edge of the transmit clock signal. Shift register 301 may then serialize these bits and transmit them sequentially through data transmission line 308, where buffer stages 318 maintain signal integrity as the data propagates. The serialized data may then be captured by first register 302 and second register 303 based on receive clock signals distributed through first receive clock line 310 and second receive clock line 311, with each register capturing one bit of the original pair. The captured data may then be output to shift register 319, which receives the data from first register 302 and second register 303 and prepares it for the next stage of transmission. Shift register 319 may then serialize the data again and transmit it through additional buffer stages 325, which are matched with corresponding clock buffer stages 326 to maintain synchronized timing relationships between data and clock signals. First register 320 and second register 321 may then capture the serialized data based on receive clock signals, with each register capturing one bit of the pair. The captured data may finally be output through first output data line 322 and second output data line 323, completing the pipelined transmission process.

As used herein, the term "clock pulse" may refer to a discrete, periodic signal transition or event within a clock waveform that is used for timing or synchronization purposes in an electronic circuit or system. A clock pulse may be characterized by a rising edge, falling edge, or both, depending on the specific circuit requirements and clock signal properties. Clock pulses may occur at regular intervals defined by the clock frequency, or may be generated on-demand or at variable intervals in some implementations. The duration, shape, and amplitude of a clock pulse may vary depending on the circuit technology, operating frequency, and design constraints. Clock pulses may be used to trigger various circuit operations, such as latching data, initiating state transitions, or coordinating the timing of multiple circuit elements. In some contexts, a clock pulse may refer to a complete clock cycle, including both the high and low portions of the waveform. Clock pulses may be generated by oscillators, derived from other clock signals, or created through manipulation of existing timing signals. The term encompasses clock pulses in various signaling schemes, including but not limited to single-ended, differential, and multi-phase clock systems.

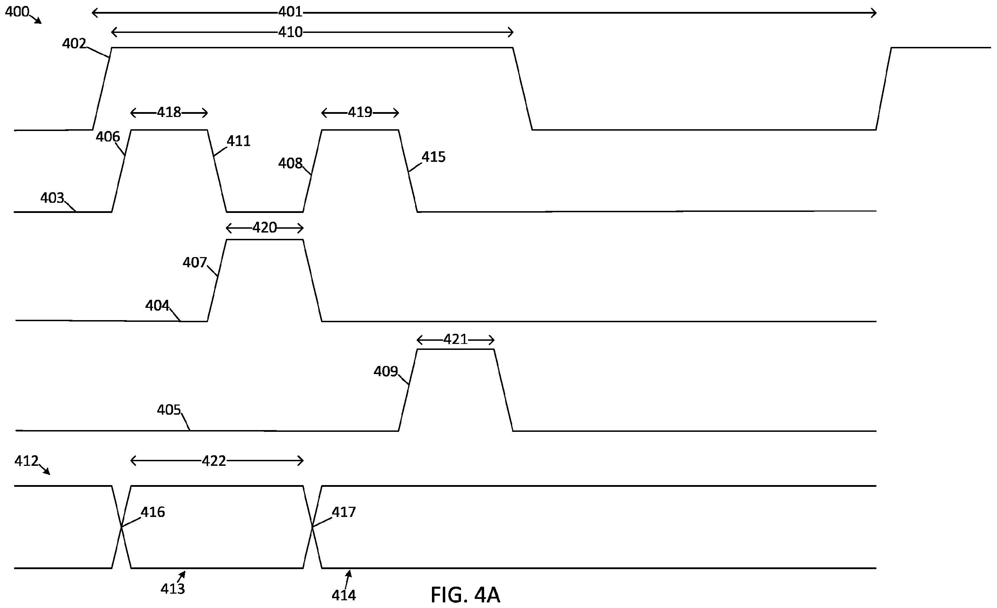

FIG. 4A illustrates a timing diagram showing signals 400 arranged along a vertical axis over a system clock cycle 401. In this example, rising edges serve as the primary edge, but other implementations may use the falling edge as the primary edge without departing from the scope of the described technology. A system clock rising edge 402 provides the primary timing reference at the top of the diagram. Below system clock rising edge 402, a transmit clock signal 403 generates pulses that coordinate with receive clock signals. A first receive clock signal 404 and a second receive clock signal 405 are positioned below transmit clock signal 403. For ease of explanation, FIG. 4A is described below with respect to data bus circuit 100 of FIG. 1; however, the clock signals illustrated in FIG. 4A may be implemented in any of the described implementations, including data bus circuits 200, 300, 500 or other suitable data bus circuit configurations.

In some cases, internal clock generating circuit 123 may use a ring oscillator to generate transmit clock signal 403, first receive clock signal 404, and second receive clock signal 405. The number of transmit clock pulses within system clock cycle 401 may correspond to the number of bits transmitted per system clock cycle. For example, transmit clock signal 403 includes a first transmit clock pulse 418 and a second transmit clock pulse 419, indicating that two bits may be transmitted during system clock cycle 401. System clock cycle 401 may be divided into N internal clock cycles, where N is two in the illustrated example. Each transmit pulse and each receive pulse may be sent on a corresponding internal clock cycle. In some implementations, not every internal clock cycle necessarily has a pulse transmitted on that clock cycle.

First receive clock signal 404 includes a first receive clock pulse 420 that corresponds to first transmit clock pulse 418, while second receive clock signal 405 includes a second receive clock pulse 421 that corresponds to second transmit clock pulse 419. In the illustrated example, first transmit clock pulse 418 may be transmitted on the first internal clock cycle, first receive clock pulse 420 may be transmitted on the second internal clock cycle, second transmit clock pulse 419 may be transmitted on the third internal clock cycle, and second receive clock pulse 421 may be transmitted on the fourth internal clock cycle. As shown in FIG. 4A, first receive clock pulse 420 occurs when transmit clock signal 403 is low. In some cases, first receive clock pulse 420 may overlap in time with second transmit clock pulse 419, with appropriate modifications for the different timing relationships.

The transmit and receive pulses may be located at any time within system clock cycle 401. For example, first receive clock pulse 420 and second receive clock pulse 421 may be timed so that the receive pulses are centered within system clock cycle 401. This timing arrangement may provide a specific sampling position for data as data propagates through data transmission line 108. In some cases, internal clock generating circuit 123 may generate N transmit pulses while shift register 101 may have fewer than N data inputs. For example, in a configuration where N equals four, but shift register 101 has only two data inputs, internal clock generating circuit 123 may generate four transmit pulses, but only two of these pulses might be used to transmit data from shift register 101. The remaining transmit pulses may remain unused or may be used for other purposes such as synchronization or error detection.

In some cases, internal clock generating circuit 123 may be configured to generate, within system clock cycle 401, transmit clock signal 403 comprising a number of pulses corresponding to the number of data inputs of shift register 101. First receive clock signal 404 and second receive clock signal 405 may each comprise a pulse corresponding to one of the number of pulses of transmit clock signal 403. In some implementations, first transmit clock falling edge 411 may trigger first receive clock rising edge 407, and second transmit clock falling edge 415 may trigger second receive clock rising edge 409. In some examples, all internal clock pulses may fall within system clock pulse 410, while in other examples, one or more of the pulses may fall within system clock cycle 401 after system clock pulse 410, subject to meeting sample and hold timing requirements or other circuit conditions. In some implementations, the phase relationship between the transmit clock signal pulse and the corresponding receive clock signal pulse may be between 120 and 240 degrees. For example, different phase relationships may be employed to address negative hold margin issues in flip-flops, providing a wider timing window for stable data capture.

FIG. 4A also illustrates data signal 412 carrying the data being transmitted, with first sampled data 413 and second sampled data 414 being captured at first sample point 416 and second sample point 417, respectively. These sample points correspond to first transmit clock rising edge 406 and second transmit clock rising edge 408. The time between bits 422 represents the interval between consecutive data transmissions. The timing relationships illustrated in FIG. 4A may establish coordination between data transmission and reception in data bus circuit 100. Shift register 101 may serialize data from first data input 102 and second data input 103 based on transmit clock signal 403. The serialized data may then propagate through data buffer stages 118 on data transmission line 108. First register 109 and second register 110 may capture the serialized data based on first receive clock signal 404 and second receive clock signal 405, respectively, with data reception occurring at the end of data transmission line 108.

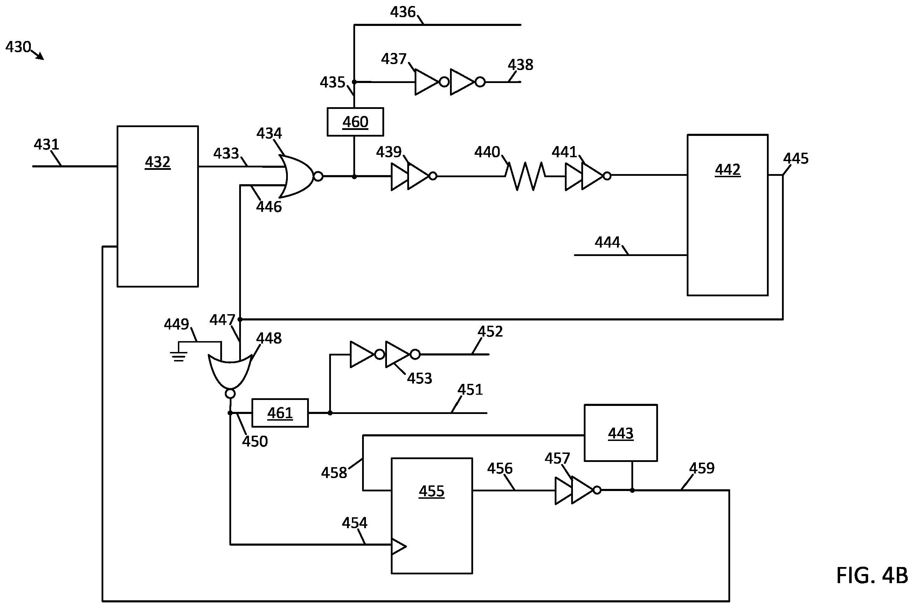

FIG. 4B illustrates a clock generation circuit 430 for coordinating data transmission in a data bus circuit. Clock generation circuit 430 may generate transmit and receive clock signals that enable multiple bits to be transmitted on a single wire during each system clock cycle. Clock generation circuit 430 may include an enable latch 432, a ring oscillator, a counter circuit 455, and output branches that distribute transmit and receive clock signals.

Enable latch 432 may trigger the initiation of internal clock signal generation based on the rising edge of a system clock pulse received from system clock line 431. Enable latch 432 may provide an enable latch output 433 to the ring oscillator via NOR gate 434. In some cases, enable latch 432 may be reset by a signal on enable latch control line 459 when a predetermined number of internal clock pulses have been generated, preventing further oscillation until the next system clock rising edge. Enable latch 432 may function as a synchronization element that ensures the internal clock generation process begins at a consistent point relative to the system clock.

The ring oscillator may comprise matched buffer 439, replica wire 440, matched buffer 441, period tuning circuit 442, ring oscillator feedback line 445, and feedback path 446. The output signal from NOR gate 434 may pass through matched buffer 439, replica wire 440, and matched buffer 441 before connecting to period tuning circuit 442. Replica wire 440 may be designed to match the characteristics of input data lines, such as first data line 105 or second data line 106. Matched buffers 439 and 441 may correspond to buffer stages in the data transmission lines. Period tuning circuit 442 may adjust the period of the clock signal generated by the ring oscillator based on control signals received via test mode bit line 444. Ring oscillator feedback line 445 may connect the output of period tuning circuit 442 back to NOR gate 434 via feedback path 446, completing the oscillation loop that generates the internal clock pulses.

Counter circuit 455 may control the number of internal clock pulses generated within a system clock cycle. Counter circuit 455 may receive input from the ring oscillator via counter circuit input 454 and count the number of clock pulses generated. When the desired count is reached, counter circuit 455 may output a DONE signal on enable latch control line 459, which may reset enable latch 432 until the next system clock rising edge. Counter circuit 455 may output a sequence of bits via counter output 456, which may be used to control other circuit operations based on the current state of the clock generation process. Buffer 457 may introduce a delay for sample and hold timing of the counter signal. In some implementations, counter circuit 455 may work in conjunction with compression circuit 443, which may allow configuration of the number of internal clock pulses generated per system clock cycle. For example, if counter circuit 455 supported up to four internal transmit clock pulses but the system is configured for 2 bits of data transmission, compression circuit 443 may program counter circuit 455 to start at bit2 instead of bit0. This flexibility may extend to other combinations of compatible bits and used bits.

In some implementations, counter circuit 455 may be constructed using N-type latches arranged in a sequential configuration to track the progression of internal clock cycles. Counter circuit 455 may maintain counter output 456 at a high voltage level (e.g., Vdd) during the initial n-1 bits of the transmission sequence, and then transition counter output 456 to a low voltage level (e.g., Vss) upon reaching the Nth bit (where buffer 457 inverts these outputs to low for the first n-1 bits. For instance, in a 4-bit transmission system, counter circuit 455 may maintain counter output 456 at Vdd during the first three internal clock cycles, and then pull counter output 456 down to Vss during the fourth internal clock cycle. This voltage transition on counter output 456 may signal the completion of a full transmission sequence to other components in the circuit. The voltage levels on counter output 456 may be established through pull-up or pull-down circuits within counter circuit 455, with the specific voltage transition points determined by the configured bit count for the current operating mode. In some cases, counter circuit 455 may include additional logic to handle variable bit counts, allowing the same physical counter implementation to support different transmission configurations based on system requirements.

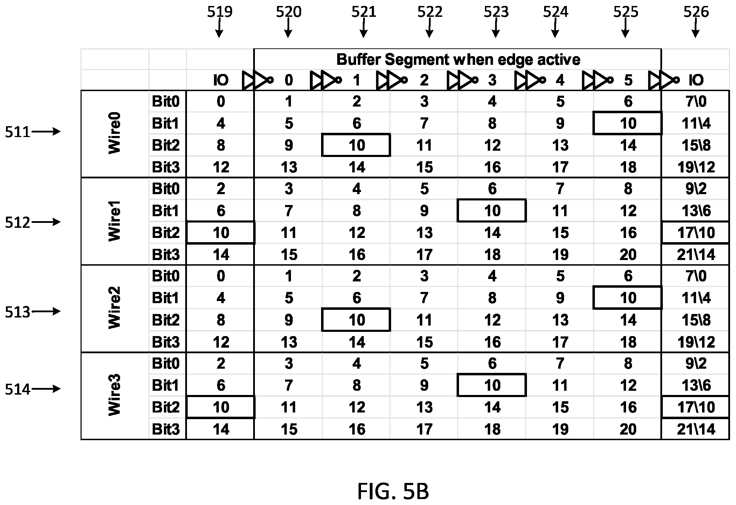

The ring oscillator may output a transmit clock signal via transmit clock output branch 435, which may connect to transmit clock line 436. A delay circuit 437 may connect to transmit clock line 436, creating a delayed transmit clock line 438. These phase-delayed outputs may be employed to delay alternating transmission lines, as discussed with respect to FIG. 5B. The transmit clock signals may be distributed to shift registers or other serialization components in the data bus circuit, controlling when data bits are placed onto the data transmission lines.

The ring oscillator may also trigger generation of receive clock signals that coordinate data capture at the receiving end of the data bus circuit. NOR gate input 447 may connect to the ring oscillator output, and NOR gate 448 (operating as an inverter via ground node 449) may generate a receive clock signal at the falling edge of the transmit clock pulse. A receive clock output branch 450 may generate a receive clock output 451, which may pass through a delay circuit 453 to create a delayed receive clock output 452. In some implementations, receive clock outputs may be coupled to a multiplexer or similar component to output separate first and second receive clock signals. For instance, the multiplexer may be controlled based on signals from counter circuit 455, allowing for dynamic selection of appropriate receive clock signals based on the current state of the data transmission process. The receive clock signals may be distributed to registers or other deserializer components, controlling when data bits are captured from the data transmission lines.

Clock generation circuit 430 may support various configuration options to adapt to different application requirements. The number of bits transmitted per wire per system clock cycle may be configurable through compression circuit 443 and counter circuit 455. The phase relationships between transmit and receive clock signals may be adjustable through period tuning circuit 442 and phase tuning circuits 460 and 461. The phase tuning circuits may implement a default delay that can be increased or decreased using digital voltage level control. In some implementations, the phase tuning circuits may utilize a MOSFET switch coupled with a MOSFET capacitor, where activating the gate connects the MOSFET capacitor to the network, increasing the load and consequently increasing the delay. Alternatively, the phase tuning circuits may enable or disable specific inverter stages in the signal path, with a shared output selectable via a tristate gate. These configuration options may allow the data bus circuit to support different trade-offs between bandwidth, latency, and power consumption, depending on the specific requirements of the application. For example, increasing the number of bits transmitted per wire may increase bandwidth but also increase latency and power consumption, while decreasing the number of bits may reduce bandwidth but improve latency and power efficiency.

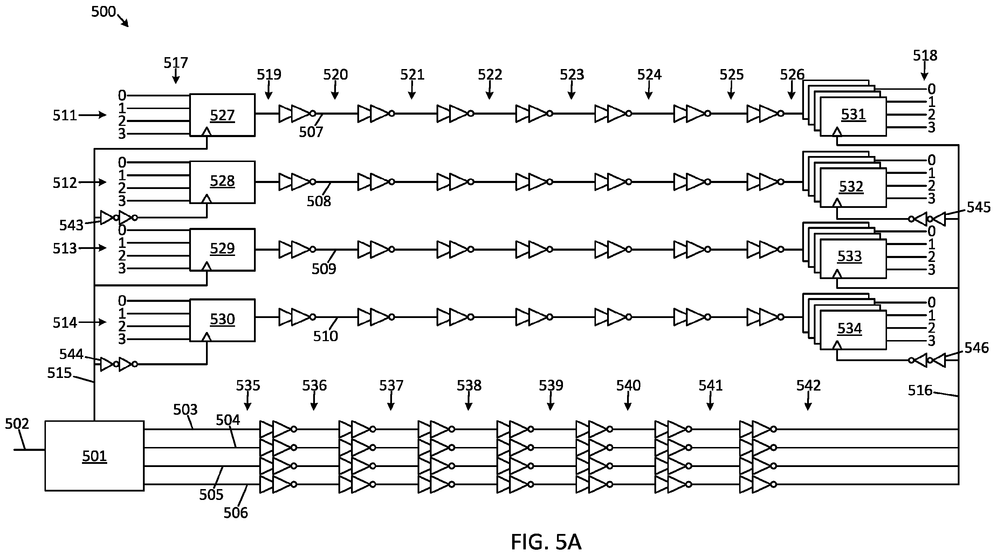

FIG. 5A and FIG. 5B illustrate a data bus circuit 500 that implements a multi-bit transmission scheme across multiple wires. FIG. 5A shows the overall architecture of data bus circuit 500, while FIG. 5B provides a detailed view of the buffer segment timing relationships. Data bus circuit 500 may include an internal clock generation circuit 501 coupled to a system clock line 502. Data bus circuit 500 may comprise receive clock lines 503, 504, 505, and 506 that distribute clock signals, and data lines 507, 508, 509, and 510 for transmitting data. In the illustrated example implementation, data bus circuit 500 includes four wires 511, 512, 513, and 514, with each wire transmitting four bits per system clock cycle, resulting in a combined bus width of 16 bits. Each wire may be coupled to a corresponding shift register (527, 528, 529, 530) that serializes the four input bits, and a corresponding register set (531, 532, 533, 534) that deserializes the bits at the receiving end. Buffer segments 520-525 maintain signal integrity as data propagates through the transmission path. In some cases, data bus circuit 500 may be implemented with hundreds of parallel wires. In other implementations, the number of bits transmitted per wire may be increased or decreased based on latency and bandwidth requirements. Data bus circuit 500 may also be coupled in series with additional data bus circuits, similar to the arrangement described in FIG. 3. The configuration enables multiple bits to be transmitted on each wire during a single system clock cycle.

As used herein, the term "wire" with respect to wire 511, wire 512, wire 513, and wire 514 may refer to a logical data path or transmission channel that carries a set of four bits from data inputs 517 to data outputs 518. A wire may comprise a series of components including shift registers, buffer segments, and register sets that work in concert to transmit and process data. The term "wire" in this context does not necessarily refer to a particular physical metallic conductor, but rather to a conceptual data transmission route that may be implemented using various electronic components and circuit elements. In some cases, a wire may include multiple physical conductors, semiconductor structures, or other signal propagation media arranged to form a single logical data path.

Data bus circuit 500 may include wires 511, 512, 513, and 514 arranged in parallel. Data inputs 517 may feed into shift registers 527, 528, 529, and 530, while data outputs 518 may connect to register sets 531, 532, 533, and 534. The data paths may include multiple buffer segments arranged in sequence. Starting from a transmit IO segment 519, the path may continue through buffer segments 520, 521, 522, 523, 524, and 525, leading to a receive IO segment 526.

Data bus circuit 500 configuration may allow data to propagate from the shift registers through the buffer segments to the register sets. Buffer segments may maintain signal integrity as data moves through the transmission path. In the illustrated example, data bus circuit 500 may have four wires, each carrying four bits during a system clock cycle, to transmit 16 bits per clock cycle. This configuration may provide a balance between high data throughput and efficient use of routing resources.

In some cases, data bus circuit 500 may be implemented with hundreds of parallel data lanes. Capacitive coupling between adjacent wires in data bus circuit 500 may create signal integrity challenges as signals propagate through data transmission lines. In some implementations, alternating wires may have alternating polarities, which may reduce coupling between adjacent wires by creating opposing electromagnetic fields that partially cancel each other. In some cases, alternating bidirectional links may be implemented where adjacent wires transmit data in opposite directions, further reducing coupling effects by limiting the number of segments where coupling can occur simultaneously. In some implementations, delay circuits 543, 544, 545, and 546 may be incorporated to create staggered timing patterns that prevent simultaneous switching on adjacent wires. Alternatively, or additionally, some implementations may include delay circuits within the clock generation circuitry, such as described with respect to FIG. 4B. In some cases, such as high density applications, data bus circuit 500 may be implemented without shielding (e.g. power traces, etc.) between lines 507-510, relying instead on the temporal isolation techniques to maintain signal integrity.

As used herein, the term "delay circuitry" may refer to any integrated circuit components to introduce a temporal offset or phase shift in a signal path. Delay circuitry may be used to adjust the timing of signals, including but not limited to clock signals, data signals, or control signals. In some implementations, delay circuitry may be employed to offset the transmit clock signal, altering its phase relationship with respect to other signals in the system. Delay circuitry may encompass various circuit elements and techniques, including but not limited to: cascaded inverters or buffers, RC networks, transmission line segments, programmable delay lines, voltage-controlled delay elements, current-starved inverters, digitally controlled oscillators, tapped delay lines, switched capacitor arrays, phase interpolators, delay-locked loops (DLLs), and all-pass filters. The delay introduced may be fixed or adjustable, ranging from picoseconds to nanoseconds or longer, depending on the specific application requirements. In some cases, delay circuitry may include calibration or compensation mechanisms to account for variations in process, voltage, and temperature (PVT). When used to offset the transmit clock signal, delay circuitry may help establish specific timing relationships between the transmit clock and other signals in the system, potentially affecting signal integrity, interference, or enabling particular transmission schemes.

In some implementations, data bus circuit 500 may be compatible with backside power delivery network (BSPDN) architectures, where power is delivered through the substrate from the backside of the integrated circuit rather than through traditional front-side metal power distribution networks. The elimination of front-side power routing may free up additional metal layers for signal routing. However, front-side power rails that were used as shields will no longer be available so those signals will have increased susceptibility to noise. Time interleaving the data launch of adjacent wires will temporally shield them. Backside power delivery may also provide more uniform power distribution with reduced IR drop.

Data bus circuit 500 may be implemented with bidirectional data flow in some cases. In some cases, the different transmission lines 507-510 may have different configurations. For example, in a bus that has a right angle turn, the transmission lines on the inside of the turn may have more delay than those at the outside, to accommodate the different path lengths of the inside and outside wires. This could be done by adding additional buffers or by implementing buffers with different phase delays, such as by adjusting the sizing or loading of individual buffer stages.

A transmit clock tree 515 and receive clock tree 516 may coordinate clock signals through data bus circuit 500. A similar arrangement to the data path may exist for the clock path, beginning with a transmit IO segment 535 and proceeding through buffer segments 536, 537, 538, 539, 540, and 541 to a receive IO segment 542. Transmit clock tree 515 may drive shift registers 527, 528, 529, and 530. This arrangement may ensure synchronized data transmission across all data lines.

Receive clock tree 516 may have four lines, one for each of receive clock lines 503-506. Each receive clock signal may drive the data capture of a corresponding register of the register groups. For example, each of the receive clock trees may correspond to one of the four bit positions transmitted on each wire. In some cases, delay circuits 543, 544, 545, and 546 may be incorporated into data bus circuit 500 to provide timing adjustments.

In some examples, delay circuits 543, 544, 545, and 546 may delay the clock signals of every other wire so that no pair of bordering stages switch at the same time. This staggered switching may help reduce electromagnetic interference and improve signal integrity. Shift registers 527, 528, 529, and 530 may connect to their respective data lines 507, 508, 509, and 510, while register sets 531, 532, 533, and 534 may receive the transmitted data.

In some implementations, data bus circuit 500 may be implemented via a library of digital circuit design elements. Data bus circuit 500 may be designed to address bandwidth limitations in integrated circuits where metal pitch does not shrink as rapidly as critical features like gate lengths. By encoding multiple data bits on a single metal wire, data bus circuit 500 may provide increased data throughput without requiring additional routing resources.

Data bus circuit 500 may use standard digital circuits which may be resilient to process, voltage, and temperature fluctuations. Data bus circuit 500 may be implemented without requiring analog blocks, separate power supplies, voltage references, or guard rings.

The number of bits transmitted per wire may be selected based on latency and bandwidth requirements. In some cases, transmitting more bits may increase bandwidth but also increase latency. Data bus circuit 500 may be configured to balance these requirements based on the specific application needs. Buffer segments 520-525 may be spaced to maintain signal integrity while optimizing for either latency or bandwidth, depending on the design requirements.

In some implementations, data bus circuit 500 may be part of a larger system such as a switch application-specific integrated circuit (ASIC), graphics processing unit (GPU), hardware accelerator, or general parallel processing unit. Data bus circuit 500 may be used in systems where data must be transferred between an IC interconnect (e.g., external data pins) and an IC processing core, where traditional routing approaches may be limited by available metal resources or signal integrity concerns. Data bus circuit 500 may be used in systems where data is transferred between two or more IC processing cores.

Data bus circuit 500 may provide a structured approach to data transmission. By controlling the timing relationships between data and clock signals, data bus circuit 500 may achieve higher data rates while maintaining signal integrity. This structured approach may also involve defined timing relationships between components. By controlling the timing boundary with the system clock the operation can be described in a standard timing format that is compatible with existing methods to incorporate circuit blocks.

In some cases, data bus circuit 500 may be implemented using standard cells. Buffer segments 520-525 may be implemented using standard buffer cells or inverters, while shift registers 527-530 and register sets 531-534 may be implemented using standard flip-flop or latch cells. This approach may allow data bus circuit 500 to be incorporated into existing design methodologies.

FIG. 5B illustrates a buffer segment timing diagram showing the relationship between data transmission across multiple wires. The diagram depicts timing on four parallel wires, wire 0 511, wire 1 512, wire 2 513, and wire 3 514, each carrying data through a series of buffer segments. The buffer segment timing diagram provides a visual representation of how data bus circuit 500 transmits data while maintaining signal integrity through precise timing control.

The buffer segments are arranged sequentially, beginning with transmit IO segment 519, followed by buffer segment 0 520, buffer segment 1 521, buffer segment 2 522, buffer segment 3 523, buffer segment 4 524, and buffer segment 5 525, and ending with receive IO segment 526. The diagram shows the timing relationships when an edge is active across these buffer segments. Each wire carries multiple bits (Bit0 through Bit3) that are transmitted through the buffer segments. The buffer segments are numbered from 0 to 5, with additional IO positions at the beginning and end of the transmission path. The timing diagram illustrates how data propagates through these segments, with numbers indicating the relative timing positions of data transmission.

The chart is numbered based on a system clock cycle with four periods. These four periods correspond to the transmission of four bits on each wire within a single system clock cycle. The timing diagram illustrates how internal clock generating circuit 501 coordinates the transmission of data across multiple wires and buffer segments. The staggered timing pattern is achieved through the use of delay circuits 543, 544, 545, and 546, which offset the clock signals for alternating wires. Data bus circuit 500 may employ temporal isolation techniques where signals on adjacent wires are phase-shifted relative to each other, ensuring that no two adjacent wires switch simultaneously. This temporal separation may be achieved through a self-timing loop mechanism where rising edges occur at 4*n intervals and falling edges at 2+4*n intervals, creating quarter-cycle offsets between neighboring signals.

The arrangement shows a structured timing pattern where data moves through each buffer segment in sequence, maintaining specific timing relationships between adjacent wires. Buffer segment 0 520, buffer segment 1 521, buffer segment 2 522, buffer segment 3 523, buffer segment 4 524, and buffer segment 5 525 provide intermediate stages for data transmission between transmit IO segment 519 and receive IO segment 526. The diagram demonstrates how data transitions occur across wire 0 511, wire 1 512, wire 2 513, and wire 3 514, with each wire carrying multiple bits through the sequential buffer stages. The timing relationships between adjacent wires and buffer segments are coordinated to facilitate data transmission while maintaining signal integrity.

The state at quarter-period number 10 is highlighted in the chart, illustrating that no neighboring wires switch concurrently. Wire 1 512 and wire 3 514 are delayed with respect to wire 0 511 and wire 2 513 by two quarter-periods. This alternating two quarter-period delay creates a staggered timing pattern that systematically prevents adjacent wires from switching simultaneously. The two quarter-period delay is implemented through delay circuits 543, 544, 545, and 546, which offset the clock signals for alternating wires in a precise manner.

This delay corresponds to half of a bit period, such that when one wire is transitioning, its adjacent wires are in a stable state. The alternating pattern means that wire 0 511 and wire 2 513 operate on the same timing schedule, while wire 1 512 and wire 3 514 operate on a timing schedule that is offset by exactly two quarter-periods. This precise offset creates temporal isolation between signals on adjacent wires. The alternating delay pattern maintains consistent timing relationships throughout the entire transmission path while ensuring that no two adjacent wires switch simultaneously.

The alternating delay arrangement shown in FIGS. 5A and 5B may be implemented to manage signal timing and reduce interference between adjacent lines. In this configuration, delay elements 543 and 544 are inserted into the clock paths for lines 512 and 514, creating a staggered timing pattern where every other line operates on a slightly delayed clock signal. This arrangement may help to temporally isolate switching events on adjacent lines, potentially reducing crosstalk and improving signal integrity. Implementations may include various alternating patterns beyond the every-other-line scheme shown. For example, delay circuits could be arranged to create a pattern where every two lines are delayed, or where delays are applied in groups of three or four lines. The magnitude of the delay may also be varied, with some implementations using multiple delay values to create more complex timing relationships between lines. Such delay arrangements may enable fine-tuning of the temporal isolation between signals, potentially supporting different line densities, transmission distances, signal coupling scenarios, etc..

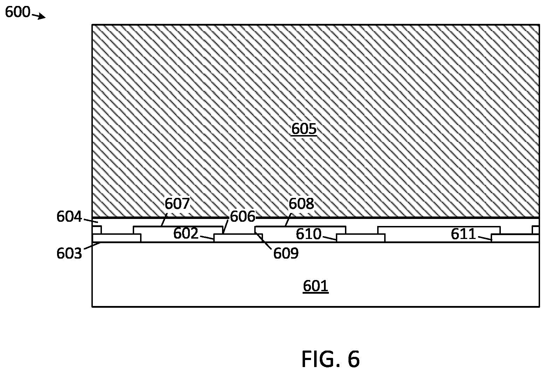

FIG. 6 illustrates a cross-sectional view of an integrated circuit 600. In some cases, integrated circuit 600 may be an implementation of data bus circuit 100, data bus circuit 200, data bus circuit 300, or data bus circuit 500 described in previous figures. Integrated circuit 600 may include semiconductor structures and metal layers arranged for serialized data transmission.

Integrated circuit 600 may include a base layer 601 that provides support for the circuit components, wherein base layer 601 may comprise a semiconductor substrate such as silicon, germanium, gallium arsenide, silicon carbide, or other suitable semiconductor materials. In some cases, base layer 601 may be formed using a silicon-on-insulator (SOI) technology, with an active semiconductor layer positioned above a buried oxide layer. Multiple buffer semiconductor structures 602, 603, 610, and 611 may be positioned along base layer 601, wherein each buffer semiconductor structure may comprise transistor devices formed within the semiconductor substrate through doping, ion implantation, diffusion, or epitaxial growth processes. In some implementations, buffer semiconductor structures 602, 603, 610, and 611 may include complementary metal-oxide-semiconductor (CMOS) transistors with p-type and n-type regions formed within the semiconductor substrate, with gate structures positioned above the substrate and separated by a gate dielectric layer. The gate structures may include polysilicon layers that may be deposited in parallel strips separated by a poly pitch, which may define the minimum spacing between adjacent transistor gates. Buffer semiconductor structures 602, 603, 610, and 611 may further include source and drain regions formed through selective doping of the semiconductor substrate, with metal contacts connecting these regions to the signal traces in the metal layers above.

Lower metal layers 604 may be arranged above buffer semiconductor structures 602, 603, 610, and 611. In some cases, lower metal layers 604 may include multiple layers of conductive material such as copper, aluminum, or alloys thereof, separated by dielectric material such as silicon dioxide, silicon nitride, or low-k dielectric materials. Lower metal layers 604 may be formed through deposition, patterning, and etching processes during semiconductor fabrication. Upper metal layers 605 may extend above lower metal layers 604 and may comprise similar conductive materials but with potentially different dimensions, spacing, or routing densities. An input port 606 may connect to a signal trace 607 and an output port 609 may connect to a signal trace 608, which may route signals through the metal layers. In some implementations, input port 606 and output port 609 may comprise contact structures such as vias, plugs, or pads that provide electrical connections between different metal layers or between metal layers and semiconductor structures.

Signal trace 607 may connect the output port of buffer semiconductor structure 603 to input port 606 of buffer semiconductor structure 602. In some cases, signal trace 607 may be formed as a patterned metal line with specific width, thickness, and spacing parameters designed to maintain signal integrity while minimizing parasitic capacitance and resistance. Buffer semiconductor structure 602 may buffer data and output the data via output port 609 to be transmitted via signal trace 608 to buffer semiconductor structure 610, and so on. Buffer semiconductor structures 602, 603, 610, and 611 may be distributed along base layer 601 beneath the data transmission paths formed by the metal layers. In some implementations, buffer semiconductor structures 602, 603, 610, and 611 may comprise active transistor devices formed through doping, ion implantation, diffusion, or epitaxial growth processes within the semiconductor substrate. These buffer semiconductor structures may include complementary metal-oxide-semiconductor (CMOS) transistors with p-type and n-type regions, gate structures positioned above the substrate and separated by a gate dielectric layer, and source and drain regions formed through selective doping of the semiconductor substrate.

In some cases, signal traces 607 and 608 may be disposed within lower metal layers 604 of integrated circuit 600. This arrangement may allow upper metal layers 605 to remain available for other purposes, such as signal and/or power routing. The specific metal layer allocation would depend on application density targets and the process fabrication technology employed in the design. Typical semiconductor processes may include several distinct categories of metal layers: a few layers for local connections, approximately 5-8 intermediate layers for general routing, and an additional 4 or more upper layers for chip-level routes and power distribution networks. By constraining the data bus routing to lower metal layers 604, which may be characterized by smaller feature sizes and thinner metal traces but higher resistance, implementations can reserve the upper metal layers 605, which typically have larger pitch, lower resistance, and greater current-carrying capacity, for global signal distribution, clock networks, or power mesh structures. This strategic layer allocation enables efficient resource utilization across different hierarchical levels of the design. In some implementations, the specific boundary between lower and upper metal layers may be defined based on physical parameters such as feature size, thickness, resistance characteristics, or the transition point where minimum pitch rules change in the fabrication process. While some implementations might utilize upper metal layers exclusively to achieve lower latency due to reduced resistance, the approach of using lower metal layers for data transmission may provide superior overall circuit density by freeing critical routing resources for other design elements. In some implementations, signal traces 607 and 608 may be designed with specific impedance characteristics to match the buffer semiconductor structures. The width, thickness, and spacing of signal traces 607 and 608 may be based on factors such as operating frequency, power constraints, and available semiconductor process technology. In some cases, signal traces 607 and 608 may include shielding structures or guard rings positioned between adjacent signal paths.

In some implementations, integrated circuit 600 may be compatible with backside power delivery network architectures, where power may be delivered through the substrate from the backside of integrated circuit 600 rather than through traditional front-side metal power distribution networks. Backside power delivery may provide power distribution across integrated circuit 600. Buffer semiconductor structures 602, 603, 610, and 611 may be designed to operate with specific voltage levels, current requirements, and switching speeds compatible with the overall power delivery architecture. In some cases, buffer semiconductor structures may include electrostatic discharge (ESD) protection circuitry. The metal layers and semiconductor structures may be fabricated using various process technologies, including bulk CMOS, silicon-on-insulator (SOI), FinFET, or other advanced semiconductor manufacturing processes.

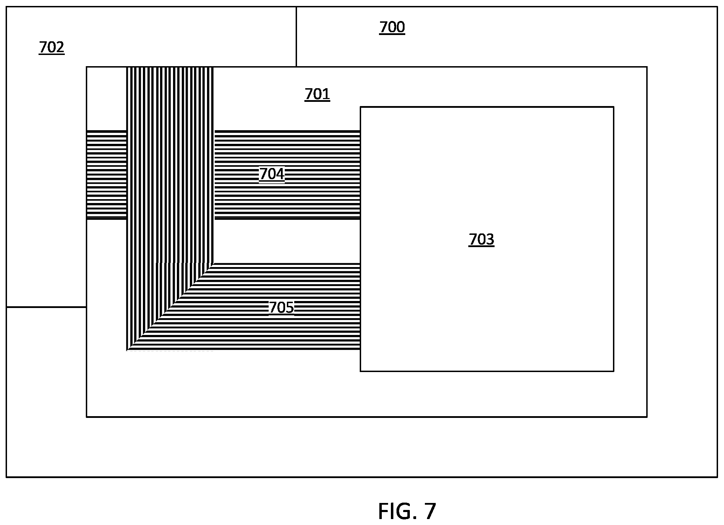

FIG. 7 illustrates a device 700 that may incorporate the data bus circuits described previously. Device 700 may include an integrated circuit (IC) 701 that contains a processor 703 and data bus circuits for data transmission. In some cases, device 700 may be a network switch, a router, a server, or other data processing equipment. Device 700 may also be implemented as a graphics processing unit (GPU), a hardware accelerator, an artificial intelligence (AI) processor, or other application-specific integrated circuit (ASIC). In some implementations, device 700 may be incorporated into a mobile computing device, a desktop computer, a data center rack system, or telecommunications equipment. The data bus circuits within device 700 may be configured to operate at various data rates, depending on the specific application requirements and implementation technology.

IC 701 may include a first data bus circuit 704 and a second data bus circuit 705 that connect processor 703 to a device data interface 702. First data bus circuit 704 and second data bus circuit 705 may be implemented using the architectures and techniques described earlier, such as those shown in data bus circuit 100, data bus circuit 200, or data bus circuit 500.

In some cases, first data bus circuit 704 may extend horizontally across a portion of IC 701, while second data bus circuit 705 may be arranged to cross first data bus circuit 704. This arrangement may provide a routing configuration between processor 703 and device data interface 702. Where second data bus circuit 705 overlaps first data bus circuit 704, second data bus circuit 705 may be routed through upper metal layers above first data bus circuit 704, similar to the arrangement shown in FIG. 6 with upper metal layers 605.

First data bus circuit 704 and second data bus circuit 705 may each include components such as a shift register, data transmission lines with buffer stages, and an internal clock generating circuit, as described in previous figures. These components may facilitate serialized data transmission between processor 703 and device data interface 702.

Device data interface 702 may provide connectivity between IC 701 and external components or systems. A data interface may comprise any physical connection points, pins, pads, or other hardware structures designed to facilitate the exchange of electrical signals or data between different components or systems. A data interface may encompass a wide range of implementations, including but not limited to: external pins or ball grid array (BGA) connections on the package of device 700, bond pads on the die of integrated circuit 701, through-silicon vias (TSVs) for 3D packaging, on-chip metal routing between functional blocks, electrostatic discharge (ESD) protection structures, termination resistors, level shifters, analog front-end circuits, multiplexers, and clock recovery circuits or phase-locked loops (PLLs). These interfaces may include various types of physical connections, such as single-ended or differential pairs, and may be designed to operate at different voltage levels, currents, or frequencies depending on the specific requirements of the system and the signals being transmitted or received. The data interface may incorporate features for signal integrity, voltage domain translation, and efficient routing to support communication between the integrated circuit 701 and external devices, as well as between internal components like the processor 703 and data bus circuits 704 and 705.

In some cases, device data interface 702 may include high-speed serializer/deserializer (SerDes) interfaces, coherent accelerator processor interface (CAPI), compute express link (CXL), NVLink, Gen-Z, OpenCAPI, RapidIO, or other high-performance interconnects for transmitting data to and from device 700. Device data interface 702 may be configured to support various data transfer protocols and may include signal conditioning circuitry for high-speed data transmission. In some implementations, device data interface 702 may include multiple interface types to accommodate different external systems or components that communicate with device 700. The arrangement of processor 703, first data bus circuit 704, second data bus circuit 705, and device data interface 702 within IC 701 may provide a data routing configuration while maintaining signal characteristics over on-chip distances.

As non-limiting examples, implementations of the described technology may capable of handling between one or more killbits (e.g., between 1200-1800 bits or more) within a compact footprint, such as between 10-20 microns. Example implementations may accommodate applications requiring large-scale data transmission, such as those involving bundles of tens of wires (e.g., 40 to 60 wires or more) grouped into units of hundreds of thousands (e.g., between100,000 to 300,000 wires or more), with the potential for multiple replications, (e.g., 3 to 5 times or more). Examples may support clock frequencies ranging from 1.2 to 1.8 GHz or more, with the capability to transmit between 2 to 4 bits per wire or more, while maintaining an attractive travel distance. In some cases, applications operating at lower clock speeds may allow for increased bits per wire, approaching a wavepipelining-like behavior. The architecture may be designed as a modular unit that can be tiled both horizontally and vertically to create larger configurations. This approach may enable the creation of extensive data buses, such as a 120,000 to 180,000-bit bus capable of traversing distances of 8 to 12 millimeters or more, which may be challenging to achieve using conventional place-and-route methodologies due to resource constraints.

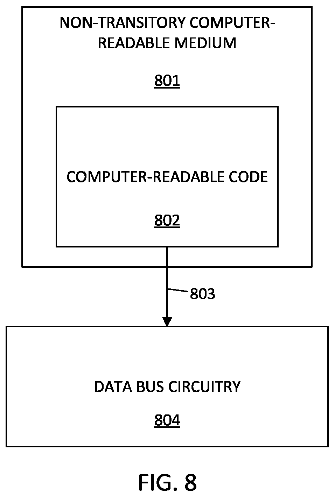

FIG. 8 illustrates a block diagram of a system for implementing data bus circuitry. The system includes a non-transitory computer-readable medium 801 containing computer-readable code 802. Computer-readable code 802 may be used in a manufacturing process 803 to produce data bus circuitry 804. Manufacturing process 803 may utilize computer-readable code 802 stored in non-transitory computer-readable medium 801 to manufacture data bus circuitry 804. Data bus circuitry 804 may represent the physical implementation of the circuit design encoded in computer-readable code 802.

Non-transitory computer-readable medium 801 may be any suitable storage device capable of storing computer-readable code 802. In some cases, non-transitory computer-readable medium 801 may be a hard disk drive, solid-state drive, flash memory, semiconductor medium, magnetic medium, optical medium, registers, cache device, or other persistent storage device. Computer-readable code 802 may include instructions, data structures, and other information necessary to define the structure and functionality of data bus circuitry 804.

Computer-readable code 802 may comprise a set of instructions that, when executed by a computer system, may define the structure and functionality of data bus circuitry 804. In some cases, computer-readable code 802 may comprise a standard cell representation of data bus circuitry 804. The standard cell representation may include descriptions of components such as shift register 101, first register 109, second register 110, data buffer stages 118, and clock buffer stages 125. These components may be represented as pre-designed logic blocks that can be integrated into the overall circuit design. Standard cells may be designed with fixed heights but variable widths to facilitate placement in rows with consistent power and ground connections. In some cases, standard cells may include basic logic gates such as NAND, NOR, and XOR gates, as well as more complex elements such as flip-flops, latches, multiplexers, and buffers for data transmission applications. Computer-readable code 802 may also include parameters for the timing relationships and buffer configurations used in the data bus circuit design.

In some cases, computer-readable code 802 may be embodied in code defining a hardware description language (HDL) representation of data bus circuitry 804. For example, the code may define a register-transfer-level (RTL) abstraction of one or more logic circuits for defining an apparatus embodying the concepts. The code may define an HDL representation of the one or more logic circuits embodying the apparatus in Verilog, SystemVerilog, Chisel, or VHDL (Very High-Speed Integrated Circuit Hardware Description Language) as well as intermediate representations such as FIRRTL. Computer-readable code 802 may provide definitions embodying the circuitry using system-level modelling languages such as SystemC and SystemVerilog or other behavioral representations of the concepts that can be interpreted by a computer to enable simulation, functional and/or formal verification, and testing of the circuitry. In some cases, the HDL representation may include variant cells that extend the standard cell library with specialized components for data bus applications. Variant cells may include configurable buffer chains with different drive strengths, specialized clock distribution networks, and serializer/deserializer blocks for different bit-width configurations. Of course, the described technology is not limited to any particular design process and may be implemented without cell libraries. For instance, computer-readable code 802 may comprise a full-custom digital design layout or a hybrid design using both custom and standard libraries.

In some cases, computer-readable code 802 may define a low-level description of integrated circuit components that embody concepts described herein, such as one or more netlists or integrated circuit layout definitions, including representations such as GDSII. The one or more netlists or other computer-readable representation of integrated circuit components may be generated by applying one or more logic synthesis processes to an RTL representation to generate definitions for use in manufacturing process 803 of an apparatus embodying the invention. In some cases, the one or more logic synthesis processes may generate from computer-readable code 802 a bitstream to be loaded into a field programmable gate array (FPGA) to configure the FPGA to implement data bus circuitry 804. The FPGA may be deployed for the purposes of verification and test of the concepts prior to fabrication in an integrated circuit or the FPGA may be deployed in a product directly. Computer-readable code 802 may include variant designs for different directional orientations, including configurations where data transmission lines are arranged parallel to polysilicon pitch or perpendicular to polysilicon pitch. These variant designs may accommodate different routing constraints and signal integrity parameters based on the specific layout requirements of the integrated circuit.

Computer-readable code 802 may support different buffer configurations with varying numbers of buffer stages based on transmission distance requirements. In some cases, short-distance configurations may utilize fewer buffer stages, while long-distance configurations may incorporate additional buffer stages to maintain signal integrity over extended transmission paths. The number of buffer stages may be automatically determined during design processes based on parameters such as total transmission distance, target latency, and signal integrity requirements. In some implementations, the placement of buffer stages may be performed through automated design processes that position buffers based on timing constraints and physical layout considerations. These design processes may include timing-driven placement algorithms that position buffers to minimize signal degradation while meeting overall timing requirements. For bidirectional implementations, computer-readable code 802 may include specialized buffer configurations that support signal transmission in both directions, with isolation mechanisms between opposing signal paths.

Computer-readable code 802 may include parameterized cell designs that allow for automatic generation of buffer chains with specific characteristics. These parameterized designs may specify buffer spacing, drive strength, and timing characteristics that can be adjusted based on the specific requirements of each data transmission path. For implementations requiring changes in routing direction, such as 90-degree turns in the data path, specialized corner cells may be included that maintain signal integrity through the direction change. These corner cells may include matched buffer stages to ensure consistent timing relationships between data and clock signals. In some implementations, computer-readable code 802 may support hierarchical design methodologies where data bus segments can be composed into larger structures while maintaining timing relationships between components. This hierarchical approach may facilitate the design of data bus networks that span across portions of an integrated circuit while maintaining signal integrity and timing consistency throughout the network.

Computer-readable code 802 may provide a compiler or library of different configurations of the basic data bus architecture. This compiler may allow designers to specify parameters such as the number of data lanes (which may range from a single lane to hundreds of parallel lanes), the number of bits transmitted per wire per system clock cycle, and the physical distance to be traversed. In some cases, the compiler may automatically generate appropriate cell designs based on these parameters, producing a circuit implementation that meets the specified requirements while considering area, power, and performance parameters. The compiler may support both horizontal and vertical routing orientations, accommodating the constraints imposed by the polysilicon pitch in modern semiconductor processes. For designs requiring turns or changes in direction, the compiler may automatically insert appropriate corner cells that maintain signal integrity through the direction change.

In some implementations, computer-readable code 802 may include specialized cell designs for structures traveling parallel and orthogonal to the polysilicon pitch. These cell designs may account for the different electrical characteristics and layout constraints associated with each orientation. For structures parallel to the polysilicon pitch, the cells may be designed to address coupling between adjacent signal lines while considering routing density. For structures orthogonal to the polysilicon pitch, the cells may be designed to cross multiple polysilicon strips while maintaining signal integrity. The compiler may automatically select the appropriate cell designs based on the routing direction and other constraints specified by the designer.

Computer-readable code 802 may support temporal isolation techniques where signals on adjacent wires are phase-shifted relative to each other. This approach may function without traditional shielding methods such as power or ground lines between signal lines. In some cases, the code may implement a self-timing loop mechanism where rising edges occur at 4*n intervals and falling edges at 2+4*n intervals, creating quarter-cycle offsets between neighboring signals. This temporal separation may ensure that no two adjacent wires switch simultaneously, addressing cross-talk concerns without requiring physical shielding. This approach may be implemented in designs using backside power delivery, where traditional front-side power grid shielding between signal lines may not be present.

For designs with non-uniform path lengths, such as those involving turns or changes in direction, computer-readable code 802 may include algorithms for automatically adjusting buffer placement and timing to accommodate the different path lengths. In some cases, the code may insert additional buffers or delay circuits on shorter paths to equalize the latency across all paths. This may ensure that all bits arrive at the destination with consistent timing relationships. For paths with significant length differences, such as those that might occur in a design with a right-angle turn where the inside wires have a shorter path than the outside wires, the code may implement timing adjustment mechanisms to maintain synchronization across all paths.

Computer-readable code 802 may include design rules and constraints that ensure correct-by-construction implementation of the data bus architecture. These rules may specify requirements such as the abutment of adjacent cells, the alignment of power and ground connections, and the matching of clock and data paths. By following these rules, designers may create data bus networks that maintain signal integrity and timing relationships without requiring manual verification of each connection. The code may also include automated verification tools that check for compliance with these design rules, flagging potential issues before the design is finalized. This approach may address design time and effort parameters for implementing data bus networks, while also addressing reliability and consistency parameters of the resulting circuits.

Manufacturing process 803 may utilize computer-readable code 802 to produce data bus circuitry 804. This process may involve multiple stages of design, simulation, verification, and physical fabrication. In some cases, manufacturing process 803 may comprise any stage of a VLSI (Very Large Scale Integration) design and fabrication process. Manufacturing process 803 may involve various steps to transform the circuit design encoded in computer-readable code 802 into physical data bus circuitry 804. These steps may include photolithography, etching, deposition, and other semiconductor fabrication techniques. In some cases, manufacturing process 803 may utilize automated design tools to interpret computer-readable code 802 and generate the necessary manufacturing instructions.

The initial stages of manufacturing process 803 may involve translating the instructions in computer-readable code 802 into a detailed circuit design. This may include creating schematic diagrams and layout designs for data bus circuitry 804. During this stage, the specific connections and arrangements of components such as shift register 101, first register 109, second register 110, data buffer stages 118, and clock buffer stages 125 may be defined. Following the design phase, manufacturing process 803 may include simulation and verification steps. These steps may help ensure that data bus circuitry 804 meets the desired performance specifications, such as data transmission rates, timing relationships, and signal integrity characteristics. Simulations may be performed to verify the functionality of the serialization and deserialization operations, the self-timing mechanisms, and the coupling isolation techniques of data bus circuitry 804.

Once the design has been verified, manufacturing process 803 may proceed to the physical fabrication of data bus circuitry 804. This may involve a series of steps including wafer processing, photolithography, etching, and deposition of various materials to create the transistors, buffers, and interconnects that make up data bus circuitry 804. After fabrication, data bus circuitry 804 may undergo testing and characterization to ensure compliance with the design specifications. This may include measurements of data transmission rates, timing margins, power consumption, and signal integrity. The testing process may also verify the effectiveness of the temporal isolation techniques and the self-timing mechanisms of data bus circuitry 804.

Data bus circuitry 804 produced by manufacturing process 803 may include physical implementations of components described in previous figures. For example, data bus circuitry 804 may include a physical shift register corresponding to shift register 101, with first data input 102, second data input 103, and clock input 104. Data bus circuitry 804 may also include physical registers corresponding to first register 109 and second register 110, coupled by a physical data transmission line 108 with data buffer stages 118. In some cases, data bus circuitry 804 may include an internal clock generating circuit corresponding to internal clock generating circuit 123, coupled to a physical system clock line. The internal clock generating circuit may be configured to generate, within a system clock cycle, a transmit clock signal comprising a number of pulses corresponding to the number of data inputs of the shift register, and a plurality of receive clock signals, each receive clock signal comprising a pulse corresponding to one of the number of pulses of the transmit clock signal.

The system illustrated in FIG. 8 may represent the circuit design as computer-readable code 802 stored on non-transitory computer-readable medium 801. The system may utilize standard cell representations in the design process. Manufacturing process 803 may produce data bus circuitry 804 based on the computer-readable code 802. In some cases, non-transitory computer-readable medium 801 and computer-readable code 802 may be used to modify the design of data bus circuitry 804 for different applications.

Manufacturing process 803 may translate the design into physical data bus circuitry 804. Data bus circuitry 804 may be implemented as data bus circuit 100, data bus circuit 200, data bus circuit 300, or data bus circuit 500 described in previous figures. In some implementations, data bus circuitry 804 may support transmission of multiple bits per wire per system clock cycle, with the number of bits configurable based on latency and bandwidth requirements. This approach may involve specific circuit arrangements for serializing and deserializing data across transmission lines.

Those skilled in the art will appreciate the arrangement or interconnection of components such as "coupled," "connected," "on," "under," or similar wording allows for indirect connections, or intervening components or layers. Terms indicating orientation or relative position such as "above," "below," "top," "bottom," "upper," "lower," "vertical," "horizontal," "over," or similar terms are used with reference to the underlying substrate of the integrated circuit, and do not imply any particular physical orientation of the integrated circuit during operation, manufacturing, or use. For example, a component described as being "above" another component means the component is farther from the substrate than the other component in the stack-up direction, regardless of how the integrated circuit might be physically oriented.

When an element is referred to herein as being "connected" or "coupled" to another element, it is to be understood that the elements can be directly connected to the other element, or have intervening elements present between the elements. In contrast, when an element is referred to as being "directly connected" or "directly coupled" to another element, it should be understood that no intervening elements are present in the "direct" connection between the elements. However, the existence of a direct connection does not exclude other connections, in which intervening elements may be present.

As used herein, unless otherwise limited or defined, "or" indicates a non-exclusive list of components or operations that may be present in any variety of combinations, rather than an exclusive list of components that may be present as alternatives to each other. For example, a list of "A, B, or C" indicates options of: A; B; C; A and B; A and C; B and C; and A, B, and C.

Correspondingly, the term "or" as used herein is intended to indicate exclusive alternatives when preceded by terms of exclusivity, such as, e.g., "either," "one of," or "exactly one of." Further, a list preceded by "one or more" (and variations thereon) and including "or" to separate listed elements indicates options of one or more of any or all of the listed elements.

For example, the phrases "one or more of A, B, or C" and "at least one of A, B, or C" indicate options of: one or more A; one or more B; one or more C; one or more A and one or more B; one or more B and one or more C; one or more A and one or more C; and one or more of each of A, B, and C.

Similarly, a list preceded by "a plurality of" (and variations thereon) and including "or" to separate listed elements indicates options of multiple instances of any or all of the listed elements. For example, the phrases "a plurality of A, B, or C" and "two or more of A, B, or C" indicate options of: A and B; B and C; A and C; and A, B, and C.

In general, the term "or" as used herein indicates exclusive alternatives (e.g., "one or the other but not both") when preceded by terms of exclusivity, such as, e.g., "either," "one of," or "exactly one of."

The articles "a," "an," and "the" are intended to include the plural forms as well, unless the context clearly indicates otherwise.

Any mark, if referenced herein, may be common law or registered trademarks of third parties affiliated or unaffiliated with the applicant or the assignee. Use of these marks is by way of example and shall not be construed as descriptive or to limit the scope of disclosed or claimed embodiments to material associated with such marks.

The terms "comprises," "includes," and "has" specify the presence of stated features, numbers, operations, members, elements, and/or combinations thereof, but do not preclude the presence or addition of one or more other features, numbers, operations, members, elements, and/or combinations thereof.

Throughout the application, unless context indicates otherwise, ordinal numbers (e.g., first, second, third, etc.) may be used as an adjective for an element (i.e., any noun in the application). Although terms such as "first," "second," and "third" may be used herein to describe various members, components, regions, layers, or sections, these members, components, regions, layers, or sections are not to be limited by these terms. Rather, these terms are used to distinguish one member, component, region, layer, or section from another member, component, region, layer, or section. The use of ordinal numbers is not to imply or create any particular ordering of the elements nor to limit any element to being a single element unless expressly disclosed, such as by the use of the terms "before," "after," "single," and other such terminology. Rather, the use of ordinal numbers is to distinguish between the elements. By way of an example, a first element is distinct from a second element, and the first element may encompass more than one element and succeed (or precede) the second element in an ordering of elements. Thus, a first member, component, region, layer, or section referred to in examples described herein may also be referred to as a second member, component, region, layer, or section without departing from the teachings of the examples.

By way of an example, a first element is distinct from a second element, and the first element may encompass more than one element and succeed (or precede) the second element in an ordering of elements. Thus, a first member, component, region, layer, or section referred to in examples described herein may also be referred to as a second member, component, region, layer, or section without departing from the teachings of the examples.

Certain operations of methods according to the technology, or of systems executing those methods, may be represented schematically in the figures or otherwise discussed herein. Unless otherwise specified or limited, representation in the figures of particular operations in particular spatial order may not require those operations to be executed in a particular sequence corresponding to the particular spatial order. Correspondingly, certain operations represented in the figures, or otherwise disclosed herein, may be executed in different orders than are expressly illustrated or described, as appropriate for particular examples of the technology. Further, in some examples, certain operations may be executed in parallel or partially in parallel, including by dedicated parallel processing devices, or separate computing devices configured to interoperate as part of a large system.

### EMBODIMENTS

Embodiment 1. A circuit, comprising:
a data serializer comprising a first plurality of data inputs and a first clock input;
a data transmission line coupled to the data serializer and comprising a first plurality of signal repeaters;
a data deserializer comprising a second plurality of data inputs coupled to the data transmission line, a plurality of second clock inputs, and a plurality of data outputs;
an internal clock generating circuit coupled to a system clock line, the internal clock generating circuit comprising a transmit clock output coupled to the first clock input, and a plurality of receive clock outputs coupled to respective second clock inputs of the plurality of second clock inputs;
a second plurality of signal repeaters, corresponding to the first plurality of signal repeaters and coupled between a respective receive clock output and a respective second clock input;
wherein the internal clock generating circuit is configured to generate, within a system clock cycle, a transmit clock signal comprising a number of pulses corresponding to the number of the first plurality of data inputs and a plurality of receive clock signals, each receive clock signal comprising a pulse corresponding to one of the number of pulses of the transmit clock signal.

Embodiment 2. The circuit of Embodiment 1, further comprising a delay circuit to establish a phase relationship between a receive clock signal pulse and the corresponding transmit clock signal pulse.

Embodiment 3. The circuit of Embodiment 1, wherein:
the data serializer is one of a plurality of data serializers; and
the data deserializer is one of a plurality of data deserializers, each data deserializer corresponding to one of the plurality of data serializers.

Embodiment 4. The circuit of Embodiment 3, wherein the data outputs of a first data serializer of the plurality of data serializers are coupled to the data inputs of a second data serializer of the plurality of data serializers.

Embodiment 5. The circuit of Embodiment 3, wherein at least a portion of the plurality of data serializers are arranged in parallel.

Embodiment 6. The circuit of Embodiment 5, further comprising clock delay circuitry coupled to alternating ones of the data serializers that are arranged in parallel, the clock delay circuitry to offset the transmit clock signal to create a staggered timing pattern for data transmission between data serializers and corresponding data deserializers.

Embodiment 7. The circuit of Embodiment 1, wherein:
the data serializer comprises a shift register; and
the data deserializer comprises a plurality of registers, each register comprising a register data input, a clock input, and a data output, a number of registers in the data deserializer corresponding to a number of data inputs of the data serializer.

Embodiment 8. A device comprising:
a processor;
a data interface;
a data bus circuit connecting the data interface and the processor, the data bus circuit including:
a data serializer comprising a first plurality of data inputs and a first clock input;
a data transmission line coupled to the data serializer and comprising a first plurality of signal repeaters;
a data deserializer comprising a second plurality of data inputs coupled to the data transmission line, a plurality of second clock inputs, and a plurality of data outputs;
an internal clock generating circuit coupled to a system clock line, the internal clock generating circuit comprising a transmit clock output coupled to the first clock input, and a plurality of receive clock outputs coupled to respective second clock inputs of the plurality of second clock inputs;
a second plurality of signal repeaters, corresponding to the first plurality of signal repeaters and coupled between a respective receive clock output and a respective second clock input;
wherein the internal clock generating circuit is configured to generate, within a system clock cycle, a transmit clock signal comprising a number of pulses corresponding to the number of the first plurality of data inputs and a plurality of receive clock signals, each receive clock signal comprising a pulse corresponding to one of the number of pulses of the transmit clock signal.

Embodiment 9. The device of Embodiment 8, further comprising a delay circuit to establish a phase relationship between a receive clock signal pulse and the corresponding transmit clock signal pulse.

Embodiment 10. The device of Embodiment 8, wherein:
the data serializer is one of a plurality of data serializers; and
the data deserializer is one of a plurality of data deserializers, each data deserializer corresponding to one of the plurality of data serializers.

Embodiment 11. The device of Embodiment 10, wherein the data outputs of a first data serializer of the plurality of data serializers are coupled to the data inputs of a second data serializer of the plurality of data serializers.

Embodiment 12. The device of Embodiment 10, wherein at least a portion of the plurality of data serializers are arranged in parallel.

Embodiment 13. The device of Embodiment 12, further comprising clock delay circuitry coupled to alternating ones of the data serializers that are arranged in parallel, the clock delay circuitry to offset the transmit clock signal to create a staggered timing pattern for data transmission between data serializers and corresponding data deserializers.

Embodiment 14. The device of Embodiment 8, wherein:
the data serializer comprises a shift register; and
the data deserializer comprises a plurality of registers, each register comprising a register data input, a clock input, and a data output, a number of registers in the data deserializer corresponding to a number of data inputs of the data serializer.

Embodiment 15. A non-transitory computer-readable medium comprising stored instructions to manufacture a circuit, the circuit comprising:
a data serializer comprising a first plurality of data inputs and a first clock input;
a data transmission line coupled to the data serializer and comprising a first plurality of signal repeaters;
a data deserializer comprising a second plurality of data inputs coupled to the data transmission line, a plurality of second clock inputs, and a plurality of data outputs;
an internal clock generating circuit coupled to a system clock line, the internal clock generating circuit comprising a transmit clock output coupled to the first clock input, and a plurality of receive clock outputs coupled to respective second clock inputs of the plurality of second clock inputs;
a second plurality of signal repeaters, corresponding to the first plurality of signal repeaters and coupled between a respective receive clock output and a respective second clock input;
wherein the internal clock generating circuit is configured to generate, within a system clock cycle, a transmit clock signal comprising a number of pulses corresponding to the number of the first plurality of data inputs and a plurality of receive clock signals, each receive clock signal comprising a pulse corresponding to one of the number of pulses of the transmit clock signal.

Embodiment 16. The non-transitory computer-readable medium of Embodiment 15, wherein the instructions comprise a standard cell representation of the circuit.

Embodiment 17. The non-transitory computer-readable medium of Embodiment 15, wherein:
the data serializer is one of a plurality of data serializers; and
the data deserializer is one of a plurality of data deserializers, each data deserializer corresponding to one of the plurality of data serializers.

Embodiment 18. The non-transitory computer-readable medium of Embodiment 17, wherein the data outputs of a first data serializer of the plurality of data serializers are coupled to the data inputs of a second data serializer of the plurality of data serializers.

Embodiment 19. The non-transitory computer-readable medium of Embodiment 17, wherein at least a portion of the plurality of data serializers are arranged in parallel.

Embodiment 20. The non-transitory computer-readable medium of Embodiment 19, wherein the circuit further comprises clock delay circuitry coupled to alternating ones of the data serializers that are arranged in parallel, the clock delay circuitry to offset the transmit clock signal to create a staggered timing pattern for data transmission between data serializers and corresponding data deserializers.

Embodiments of the disclosure are described in the general context of method operations which may be implemented in one embodiment by a program product including machine-executable instructions, such as program code, for example, in the form of program modules executed by machines in networked environments.

It should be noted that although the flowcharts provided herein show a specific order of method steps, it is understood that the order of these operations may differ from what is depicted. Also two or more steps may be performed concurrently or with partial concurrence. Such variation will depend on the software and hardware systems chosen and on designer choice. It is understood that all such variations are within the scope of the disclosure.

The foregoing description of embodiments of the disclosure have been presented for purposes of illustration and description. It is not intended to be exhaustive or to limit the disclosure to the precise form disclosed, and modifications and variations are possible in light of the above teachings or may be acquired from practice of the disclosure. The embodiments were chosen and described in order to explain the principals of the disclosure and its practical application to enable one skilled in the art to utilize the disclosure in various embodiments and with various modifications as are suited to the particular use contemplated.

## Claims

1. A circuit, comprising:
a data serializer comprising a first plurality of data inputs and a first clock input;
a data transmission line coupled to the data serializer and comprising a first plurality of signal repeaters;
a data deserializer comprising a second plurality of data inputs coupled to the data transmission line, a plurality of second clock inputs, and a plurality of data outputs;
an internal clock generating circuit coupled to a system clock line, the internal clock generating circuit comprising a transmit clock output coupled to the first clock input, and a plurality of receive clock outputs coupled to respective second clock inputs of the plurality of second clock inputs; and
a second plurality of signal repeaters, corresponding to the first plurality of signal repeaters and coupled between a respective receive clock output and a respective second clock input;
wherein the internal clock generating circuit is configured to generate, within a system clock cycle, a transmit clock signal comprising a number of pulses corresponding to the number of the first plurality of data inputs and a plurality of receive clock signals, each receive clock signal comprising a pulse corresponding to one of the number of pulses of the transmit clock signal.

2. The circuit of claim 1, further comprising
a delay circuit to establish a phase relationship between a receive clock signal pulse and the corresponding transmit clock signal pulse.

3. The circuit of claim 1 or 2, wherein:
the data serializer is one of a plurality of data serializers; and
the data deserializer is one of a plurality of data deserializers, each data deserializer corresponding to one of the plurality of data serializers.

4. The circuit of claim 3, wherein
the data outputs of a first data serializer of the plurality of data serializers are coupled to the data inputs of a second data serializer of the plurality of data serializers.

5. The circuit of claim 3 or 4, wherein
at least a portion of the plurality of data serializers are arranged in parallel.

6. The circuit of claim 5, further comprising
clock delay circuitry coupled to alternating ones of the data serializers that are arranged in parallel, the clock delay circuitry to offset the transmit clock signal to create a staggered timing pattern for data transmission between data serializers and corresponding data deserializers.

7. The circuit of any one of the claims 1 to 6, wherein:
the data serializer comprises a shift register; and
the data deserializer comprises a plurality of registers, each register comprising a register data input, a clock input, and a data output, a number of registers in the data deserializer corresponding to a number of data inputs of the data serializer.

8. A device comprising:
a processor;
a data interface;
a data bus circuit as set forth in any one of the preceding claims, the data bus circuit connecting the data interface and the processor.

9. A non-transitory computer-readable medium comprising stored instructions to manufacture a circuit as set forth in any one of the preceding claims 1 to 7.

10. The non-transitory computer-readable medium of claim 9, wherein
the instructions comprise a standard cell representation of the circuit.
